(19) Europäisches Patentamt
European Patent Office
Office européen des brevets

(11) EP 4 281 498 B1

(12) EUROPEAN PATENT SPECIFICATION

(45) Date of publication and mention of the grant of the patent:
**10.09.2025 Bulletin 2025/37**

(21) Application number: **22701930.4**

(22) Date of filing: **20.01.2022**

(51) International Patent Classification (IPC):
***C08L 23/14*** *(2006.01)* ***C08F 210/16*** *(2006.01)*
***C08F 110/06*** *(2006.01)* ***C08F 2/00*** *(2006.01)*
***C08F 210/06*** *(2006.01)* ***C08K 7/14*** *(2006.01)*
***C08L 51/06*** *(2006.01)* ***C08F 4/659*** *(2006.01)*

(52) Cooperative Patent Classification (CPC):
(C-Sets available)
**C08L 23/14; C08F 210/06;** C08F 4/65908;
C08F 4/65912; C08F 110/06 (Cont.)

(86) International application number:
**PCT/EP2022/051204**

(87) International publication number:
**WO 2022/157229 (28.07.2022 Gazette 2022/30)**

# (54) FIBER REINFORCED COMPOSITION COMPRISING A PROPYLENE RANDOM COPOLYMER

FASERVERSTÄRKTE ZUSAMMENSETZUNG MIT EINEM STATISTISCHEN PROPYLENCOPOLYMER

COMPOSITION RENFORCÉE PAR DES FIBRES COMPRENANT UN COPOLYMÈRE ALÉATOIRE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2021 EP 21152960**
**27.01.2021 EP 21153759**

(43) Date of publication of application:
**29.11.2023 Bulletin 2023/48**

(73) Proprietor: **Borealis GmbH**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **GRESTENBERGER, Georg**
  **4021 Linz (AT)**
- **KLIMKE, Katja**
  **4021 Linz (AT)**

(74) Representative: **Maiwald GmbH**
**Elisenhof**
**Elisenstraße 3**
**80335 München (DE)**

(56) References cited:
**EP-A1- 3 095 819 WO-A1-2014/033017**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 4/65927;**
**C08L 23/14, C08K 7/14, C08L 23/14, C08L 51/06;**
C08F 110/06, C08F 4/6492;
C08F 210/06, C08F 2/001;
C08F 210/06, C08F 210/08, C08F 2500/12, C08F 2500/27;
C08F 210/06, C08F 210/08, C08F 2500/12, C08F 2500/27, C08F 2500/35, C08F 2500/32, C08F 2500/34;
C08F 210/06, C08F 210/14, C08F 2500/12, C08F 2500/27;
C08F 210/06, C08F 210/14, C08F 2500/12, C08F 2500/27, C08F 2500/35, C08F 2500/32, C08F 2500/34

## Description

The present invention is directed to a fiber reinforced polypropylene composition (C) comprising a propylene random copolymer (P), fibers (F) and an adhesion promoter (AP) as well as an article comprising said fiber reinforced polypropylene composition (C).

Fiber reinforced materials are widely used in various applications, especially in the engineering area, where higher stiffness, higher heat deflection temperature (HDT) and good impact resistance are seen as benefits. Polypropylene is one of the most popular base polymers due to its diversity, low cost and lower density. It can fulfill most of the target properties. Polypropylene prepared in the presence of metallocene catalysts is a promising candidate due to extra benefits such as controlled molecular weight distribution, good comonomer incorporation and low emissions. However, the current grades have intrinsic drawbacks, since the stiffness and HDT are frequently not high enough. In some specific areas like automotive exterior, excellent impact properties are also required.

WO 2014/033017 A1 relates to a fiber reinforced composition comprising (a) a polypropylene random copolymer, (b) fibers, and (c) a polar modified polypropylene as adhesion promoter. EP 3095819 A1 relates to fiber reinforced polymer composition comprising a polypropylene, carbon fibers and a polar modified polypropylene as coupling agent as well as to an article comprising the fiber reinforced polymer composition.

Accordingly, there is a need in the art for a fiber reinforced polypropylene material combining good stiffness and impact properties with low emissions. Moreover, excellent flow properties are required for injection moulding processing.

Hence, it is an object of the present invention to provide a high flow fiber reinforced polypropylene composition featured by balanced stiffness and impact properties as well as low emissions.

This object is solved by a fiber reinforced polypropylene composition (C), comprising

a) 57.0 to 94.9 wt.-% of a propylene random copolymer (P) wherein the comonomer is selected from ethylene and/or at least one C4 to C12 $\alpha$-olefin, said propylene random copolymer (P) having

i) a melt flow rate $MFR_2$ (230 °C, 2.16 kg) determined according to ISO 1133 in the range of 45 to 150 g/10 min, and
ii) a melting temperature Tm determined according to differential scanning calorimetry (DSC) in the range of 125 to 150 °C,
iii) an amount of 1,2 erythro regio-defects of at least 0.4 mol-%,

b) 5.0 to 40.0 wt.-% of fibers (F), and
c) 0.1 to 5.0 wt.-% of an adhesion promoter (AP) being a polar modified polypropylene (PM-PP) homo- or copolymer,

based on the overall weight of the fiber reinforced composition (C).

According to an embodiment of the present invention, the propylene random copolymer (P) comprises

i) a first propylene random copolymer (P1), and
ii) a second propylene random copolymer (P2) having a higher comonomer content than the first propylene random copolymer (P1),

wherein the weight ratio between the first propylene random copolymer (P1) and the second propylene random copolymer (P2) is in the range of 20/80 to 60/40 and the combined amount of the first propylene random copolymer (P1) and the second propylene random copolymer (P2) based on the propylene random copolymer (P) is at least 95.0 wt.-%.

According to a further embodiment of the present invention, the propylene random copolymer (P) has a comonomer content in the range of 1.0 to 6.0 mol-%.

According to another embodiment of the present invention, the first propylene random copolymer (P1) has a comonomer content in the range of 0.4 to 2.5 mol-%, and the second propylene random copolymer (P2) has a comonomer content in the range of 2.8 to 7.0 mol-%.

According to one embodiment of the invention, the comonomer is at least one C4 to C12 $\alpha$-olefin. It is especially preferred that the comonomer is 1-hexene or 1-butene.

According to one embodiment of the present invention, the propylene random copolymer (P) has a xylene soluble content (XCS) determined according to ISO 16152 (25 °C) in the range of 3.0 to 15.0 wt.-%, based on the overall weight of the propylene random copolymer.

According to another embodiment of the present invention, the propylene random copolymer (P) has been visbroken with a visbreaking ratio [final $MFR_2$ (230 °C/2.16 kg) / initial $MFR_2$ (230 °C/2.16 kg)] of at least 5.0, wherein "final $MFR_2$ (230 °C/2.16 kg)" is the $MFR_2$ (230 °C/2.16 kg) of the propylene random copolymer (P) after visbreaking and "initial $MFR_2$ (230 °C/2.16 kg)" is the $MFR_2$ (230 °C/2.16 kg) of the propylene random copolymer (P) before visbreaking. $MFR_2$ (230 °C, 2.16 kg) is determined according to ISO 1133.

According to a further embodiment of the present invention, the propylene random copolymer (P) has a melt flow rate $MFR_2$ (230 °C, 2.16 kg) determined according to ISO 1133 before visbreaking in the range of 0.5 to 10.0 g/10 min.

According to another embodiment of the present invention, the fibers (F) are glass fibers (GF), preferably short glass fibers (SGF) having an average length of 2.0 to 10.0 mm, and/or an average diameter of 5 to 20 μm.

According to one embodiment of the present invention, the adhesion promoter (AP) is a polar modified polypropylene (PM-PP) being a propylene homo- or copolymer grafted with maleic anhydride having a melt flow rate $MFR_2$ (230 °C, 2.16 kg) determined according to ISO 1133 of 20.0 g/10 min to 400 g/10 min.

According to a further embodiment of the present invention, the fiber reinforced composition (C) has a melt flow rate $MFR_2$ (230 °C, 2.16 kg) determined according to ISO 1133 in the range of 8.0 to 60.0 g/10 min.

According to another embodiment of the present invention, the propylene random copolymer (P) is obtained in the presence of a solid catalyst system (SCS) comprising a metallocene compound.

It is especially preferred that the metallocene compound has the formula (I)

$$R_n(Cp)_2MX_2 \qquad (I)$$

wherein

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand; the optional one or more substituent(s) being independently selected preferably from halogen, hydrocarbyl (e.g. C1-C20-alkyl, C2-C20-alkenyl, C2- C20-alkynyl, C3-C12-cycloalkyl, C6-C20-aryl or C7-C20-arylalkyl), C3-C12- cycloalkyl which contains 1, 2, 3 or 4 heteroatom(s) in the ring moiety, C6-C20- heteroaryl, C1-C20-haloalkyl, $-SiR''_3$, $-OSiR''_3$, -SR", $-PR''_2$, OR" or $-NR''_2$,

each R" is independently a hydrogen or hydrocarbyl, e.g. C1-C20-alkyl, C2- C20-alkenyl, C2-C20-alkynyl, C3 -C12-cycloalkyl or C6-C20-aryl; or e.g. in case of $-NR''_2$, the two substituents R" can form a ring, e.g. five- or six-membered ring, together with the nitrogen atom to which they are attached;

R is a bridge of 1-3 atoms, e.g. a bridge of 1-2 C-atoms and 0-2 heteroatoms, wherein the heteroatom(s) can be e.g. Si, Ge and/or O atom(s), wherein each of the bridge atoms may bear independently substituents, such as Cl-C20-alkyl, tri(C1-C20-alkyl)silyl, tri(C1-C20-alkyl)siloxy or C6-C20-aryl substituents); or a bridge of 1-3 , e.g. one or two, hetero atoms, such as silicon, germanium and/or oxygen atom(s), e.g. $-SiR^{10}_2$, wherein each $R^{10}$ is independently C1-C20-alkyl, C3-12 cycloalkyl, C6-C20-aryl or tri(C1-C20-alkyl)silyl- residue, such as trimethylsilyl;

M is a transition metal of Group 4, e.g. Zr or Hf, especially Zr;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", $-PR''_3$, $-SiR''_3$, $-OSiR''_3$, $-NR''_2$ or $-CH_2-Y$, wherein Y is C6-C20-aryl, C6-C20-heteroaryl, C1-C20-alkoxy, C6-C20-aryloxy, $NR''_2$,-SR", $-PR''_3$, $-SiR''_3$, or $-OSiR''_3$;

each of the above mentioned ring moieties alone or as a part of another moiety as the substituent for Cp, X, R" or R can further be substituted e.g. with C1-C20-alkyl which may contain Si and/or O atoms;

n is 1 or 2.

The present invention is further directed to an article, comprising the fiber reinforced composition (C) according to any one of claims 1 to 14.

In the following, the present invention is described in more detail.

**The fiber reinforced composition (C)**

The fiber reinforced composition (C) according to the present invention comprises a propylene random copolymer (P), fibers (F) and an adhesion promoter (AP).

The fiber reinforced composition (C) comprises

a) 57.0 to 94.9 wt.-%, preferably 60.0 to 90.0 wt.-%, more preferably 65.0 to 85.0 wt.-%, still more preferably 70.0 to 80.0 wt.-% of the propylene random copolymer (P),

b) 5.0 to 40.0 wt.-%, preferably 8.0 to 37.0 wt.-%, more preferably 11.0 to 32.0 wt.-%, still more preferably 15.0 wt.-% to 27.0 wt.-% of the fibers (F), and

c) 0.1 to 5.0 wt.-%, preferably 0.5 to 4.0 wt.-%, more preferably 0.8 to 3.5 wt.-%, still more preferably 1.0 to 3.0 wt.-% of the adhesion promoter (AP),

based on the overall weight of the fiber reinforced composition (C).

Further, the fiber reinforced composition (C) according to the invention may comprise additives (AD). In one embodiment, the fiber reinforced composition (C) comprises, preferably consists of,

a) 57.0 to 94.8 wt.-%, preferably 60.0 to 90.0 wt.-%, more preferably 65.0 to 85.0 wt.-%, still more preferably 70.0 to 80.0 wt.-% of the propylene random copolymer (P),

b) 5.0 to 40.0 wt.-%, preferably 8.0 to 37.0 wt.-%, more preferably 11.0 to 32.0 wt.-%, still more preferably 15.0 wt.-% to 27.0 wt.-% of the fibers (F), and

c) 0.1 to 5.0 wt.-%, preferably 0.5 to 4.0 wt.-%, more preferably 0.8 to 3.5 wt.-%, still more preferably 1.0 to 3.0 wt.-% of the adhesion promoter (AP),

d) 0.01 to 2.5 wt.-% of additives (AD) based on the overall weight of the fiber reinforced composition (C), wherein the amounts of components a) to d) are preferably selected to give 100 wt.%.

Accordingly, it is preferred that the fiber reinforced composition (C) comprises, more preferably consists of

a) 57.0 to 92.4 wt.-%, preferably 60.0 to 90.0 wt.-%, more preferably 65.0 to 85.0 wt.-%, still more preferably 70.0 to 80.0 wt.-% of the propylene random copolymer (P),

b) 5.0 to 40.0 wt.-%, preferably 8.0 to 37.0 wt.-%, more preferably 11.0 to 32.0 wt.-%, still more preferably 15.0 wt.-% to 27.0 wt.-% of the fibers (F),

c) 0.1 to 5.0 wt.-%, more preferably 1.0 to 3.0 wt.-% of the adhesion promoter (AP), and

d) 0.01 to 2.5 wt.-% of additives (AD),

based on the overall weight of the fiber reinforced composition (C). The additives (AD) are described in more detail below.

Preferably the fiber reinforced composition (C) of the invention does not comprise (a) further polymer(s) different to the propylene random copolymer (P) and the adhesion promoter (AP) in an amount exceeding 5.0 wt.-%, preferably in an amount exceeding 3.0 wt.-%, more preferably in an amount exceeding 2.5 wt.-%, based on the overall weight of the fiber reinforced composition (C). One additional polymer which may be present in such low amounts is a polyethylene which is a reaction by-product obtained by the preparation of the propylene random copolymer (P). Accordingly, it is in particular appreciated that the fiber reinforced composition (C) contains only the propylene random copolymer (P), the adhesion promoter (AP) and optionally polyethylene in amounts as mentioned in this paragraph as polymeric compounds.

It is especially preferred that the inventive fiber reinforced composition (C) does not comprise any elastomeric polymer(s) in an amount exceeding 5.0 wt.-%, preferably in an amount exceeding 3.0 wt.-%, more preferably in an amount exceeding 2.5 wt.-%, based on the overall weight of the fiber reinforced composition (C). In particular, it is preferred that the inventive fiber reinforced composition (C) does not comprise any ethylene propylene rubbers (EPR) in an amount exceeding 5.0 wt.-%, preferably in an amount exceeding 3.0 wt.-%, more preferably in an amount exceeding 2.5 wt.-%, based on the overall weight of the fiber reinforced composition (C). Accordingly, it is preferred that the fiber reinforced composition has a xylene soluble content (XCS) determined according to ISO 16152 (25 °C) in the range of 3.0 to 15.0 wt.-%, more preferably in the range of 3.5 to 12.0 wt.-%, still more preferably in the range of 4.0 to 10.0 wt.-%, like in the range of 4.5 to 9.5 wt.-%, based on the overall weight of the fiber reinforced composition (C).

Preferably, the fiber reinforced composition (C) has a melt flow rate $MFR_2$ (230 °C, 2.16 kg) determined according to ISO 1133 in the range of 8.0 to 60.0 g/10 min, more preferably in the range of 10.0 to 50.0 g/10 min, still more preferably in the range of 12.0 to 40.0 g/10 min, like in the range of 14.0 to 30.0 g/10 min.

Further, it is preferred that the fiber reinforced composition (C) has a melting temperature determined by differential scanning calorimetry (DSC) equal or below 155 °C, more preferably in the range of 125 to 150 °C, still more preferably in the range of 130 to 145 °C, like in the range of 132 to 140 °C.

Regarding the mechanical properties, it is preferred that the fiber reinforced composition (C) has tensile modulus determined according to ISO 527-1A in the range of 2500 to 6000 MPa, more preferably in the range of 2800 to 5500 MPa, still more preferably in the range of 3000 to 5200 MPa, like in the range of 3200 to 5000 MPa and/or a tensile strength determined according to ISO 527-2 in the range of 40 to 100 MPa, preferably 40 to 80 MPa, more preferably in the range of 42 to 70 MPa, still more preferably in the range of 45 to 68 MPa, like in the range of 50 to 65 MPa.

Additionally or alternatively to the previous paragraph, it is preferred that the fiber reinforced composition (C) has a Charpy unnotched impact strength determined according to ISO 179 at 23°C of at least 25.0 $kJ/m^2$, more preferably at least 30.0 $kJ/m^2$, still more preferably 35.0 $kJ/m^2$, like at least 40.0 $kJ/m^2$. A reasonable upper limit for the Charpy

unnotched impact strength determined according to ISO 179 at 23°C is 100 kJ/m$^2$.

Moreover, it is preferred that the fiber reinforced composition (C) has a heat deflection temperature (HDT) determined according to ISO 75 A of at least 110 °C, more preferably at least 115 °C, still more preferably at least 120 °C, like at least 125 °C. A reasonable upper limit for the heat deflection temperature (HDT) determined according to ISO 75 A is 155°C.

Further, it is preferred that the fiber reinforced composition (C) comprises a low amount of volatile compounds (VOC) as determined according to VDA 278 of below 25 $\mu$g/g, more preferably below 20 $\mu$g/g, still more preferably below 15 $\mu$g/g, like below 12 $\mu$g/g.

Likewise, it is preferred that the fiber reinforced composition (C) comprises a low amount of medium volatile compounds (FOG) as determined according to VDA 278 of below 80 $\mu$g/g, more preferably below 75 $\mu$g/g, still more preferably below 45 $\mu$g/g, like below 40 $\mu$g/g.

The fiber reinforced composition (C) is preferably obtained by melt blending the propylene random copolymer (P), the fibers (F), optionally the adhesion promoter (AP) and optionally the additives (AD).

In the following, the components of the fiber reinforced composition (C) are described in more detail.

**The propylene random copolymer (P)**

The inventive fiber reinforced composition (C) comprises a propylene random copolymer (P).

In particular, the propylene random copolymer (P) is a copolymer of propylene and ethylene and/or at least one C4 to C12 $\alpha$-olefin. Accordingly, the propylene random copolymer (P) comprises monomers copolymerizable with propylene selected from ethylene and C4 to C12 $\alpha$-olefins. Preferably, the comonomer(s) is (are) selected from ethylene and C4 to C6 $\alpha$-olefins, e.g. 1-butene and/or 1-hexene. It is especially preferred that the propylene random copolymer according to the invention comprises, more preferably consists of, propylene and monomers copolymerizable with propylene selected from the group consisting of ethylene, 1-butene and 1-hexene. More specifically, the propylene random copolymer (P) of this invention comprises - apart from propylene - units derivable from ethylene, 1-butene and/or 1-hexene.

According to a preferred embodiment of the present invention, the comonomer is 1-hexene. Therefore, it is especially preferred that the propylene random copolymer (P) comprises units derivable from propylene and 1-hexene only. In other words, it is preferred that only propylene and 1-hexene have been polymerized.

The term "random copolymer" has to be preferably understood according to IUPAC (Pure Appl. Chem., Vol. No. 68, 8, pp. 1591 to 1595, 1996). Preferably the molar concentration of comonomer dyads, like 1-hexene dyads, obeys the relationship

$$[HH] < [H]^2$$

wherein

[HH] is the molar fraction of adjacent comonomer units, like of adjacent 1-hexene units, and
[H] is the molar fraction of total comonomer units, like of total 1-hexene units, in the polymer.

Preferably, the propylene random copolymer (P) has a comonomer content, more preferably 1-hexene content, in the range of 1.0 to 6.0 mol-%, more preferably in the range of 1.5 to 5.2 mol-%, still more preferably in the range of 2.0 to 4.7 mol-%, like in the range of 2.2 to 4.2 mol-%.

Further, it is preferred that the propylene random copolymer (P) is bimodal.

In particular, it is preferred that the propylene random copolymer (P) comprises

i) a first propylene random copolymer (P1), and
ii) a second propylene random copolymer (P2) having a higher comonomer content, preferably 1-hexene content, than the first propylene random copolymer (P1),

wherein the combined amount of the first propylene random copolymer (P1) and the second propylene random copolymer (P2) based on the propylene random copolymer (P) is at least 95.0 wt.-%, more preferably 97.0 wt.-%, still more preferably 99.0 wt.-%, like 99.9 wt.-%. It is especially preferred that the random propylene copolymer essentially consists of, preferably consists of the first propylene random copolymer (P1) and the second propylene random copolymer (P2).

Regarding the term "random copolymer", reference is made to the definition provided above.

Preferably, the weight ratio between the first propylene random copolymer (P1) and the second propylene random copolymer (P2) is in the range of 20/80 to 60/40, more preferably in the range of 30/70 to 55/45, still more preferably

in the range of 40/60 to 50/50.

The second propylene random copolymer (P2) preferably has a higher comonomer content, like 1-hexene content, than the first propylene random copolymer (P1). Preferably, the ratio C(P2)/C(P1) is in the range of 1.1 to 10.0, more preferably in the range of 2.0 to 7.5, still more preferably in the range of 3.0 to 6.2, wherein C(P2) is the comonomer content, preferably 1-hexene content, in [mol-%] of the second propylene random copolymer (P2) and C(P1) is the comonomer content, preferably 1-hexene content, in [mol-%] of the first propylene random copolymer (P2).

It is especially preferred that the first propylene random copolymer (P1) has a comonomer content, preferably 1-hexene content, in the range of 0.4 to 2.5 mol-%, more preferably in the range of 0.5 to 2.0 mol-%, still more preferably in the range of 0.6 to 1.6 mol-%.

The second propylene random copolymer (P2) preferably has a comonomer content, preferably 1-hexene content, in the range of 2.8 to 7.0 mol-%, more preferably in the range of 3.0 to 6.0 mol-%, still more preferably in the range of 3.2 to 5.0 mol-%.

The propylene random copolymer (P) has an amount of 1,2 erythro regio-defects of at least 0.4 mol-%, preferably in the range of 0.4 to 1.2 mol-%. Without being bound to theory, a high amount of misinsertions of propylene and/or 1-hexene and/or 1-butene within the polymer chain indicates that the propylene random copolymer (P) is produced in the presence of a single site catalyst, preferably a metallocene catalyst. It is known in the art that propylene random copolymers which are produced in the presence of a Ziegler-Natta catalyst can have an amount of 1,2 erythro regio-defects of well below 0.4 mol-%, and are often essentially free of 1,2 erythro regio-defects.

The propylene random copolymer (P) has a melt flow rate $MFR_2$ (230 °C, 2.16 kg) determined according to ISO 1133 in the range of 45 to 150 g/10 min.

Further, it is preferred that the propylene random copolymer (P) according to the present invention has a rather high melt flow rate. Accordingly, the propylene random copolymer (P) has a melt flow rate $MFR_2$ (230 °C, 2.16 kg) determined according to ISO 1133 in the range of 45.0 to 150 g/10 min, preferably in the range of 50.0 to 130 g/10 min, more preferably in the range of 55.0 to 110 g/10 min, still more preferably in the range of 60.0 to 100 g/10 min.

In this regard, it is preferred that the propylene random copolymer (P) is visbroken.

By visbreaking the propylene random copolymer (P) with heat or at more controlled conditions with peroxides, the molar mass distribution (MWD) becomes narrower because the long molecular chains are more easily broken up or scissored and the molar mass M, will decrease, corresponding to an $MFR_2$ increase. The $MFR_2$ increases with increase in the amount of peroxide which is used. Unless otherwise indicated, throughout the instant invention the melt flow rate $MFR_2$ (230 °C/2.16 kg) of the propylene random copolymer (P), is preferably the melt flow rate (230 °C/2.16 kg) after visbreaking.

Preferred mixing devices suited for visbreaking are discontinuous and continuous kneaders, twin screw extruders and single screw extruders with special mixing sections and co-kneaders.

Visbreaking may be carried out in any known manner, like by using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxyisopropyl)benzene (DIPP) (for instance sold under the tradenames Perkadox 14S and Luperox DC). Suitable amounts of peroxide to be employed in accordance with the present invention are in principle known to the skilled person and can easily be calculated on the basis of the amount of propylene random copolymer (P) to be subjected to visbreaking, the $MFR_2$ (230 °C/2.16 kg) value of the propylene random copolymer (P) to be subjected to visbreaking and the desired target $MFR_2$ (230 °C/2.16 kg) of the product to be obtained. Accordingly, typical amounts of peroxide visbreaking agent are from 0.005 to 0.7 wt.-%, more preferably from 0.01 to 0.4 wt.-%, based on the total amount of propylene random copolymer (P) employed.

Typically, visbreaking in accordance with the present invention is carried out in an extruder, so that under the suitable conditions, an increase of melt flow rate is obtained. During visbreaking, higher molar mass chains of the starting product are broken statistically more frequently than lower molar mass molecules, resulting as indicated above in an overall decrease of the average molecular weight and an increase in melt flow rate.

Accordingly, the melt flow rate $MFR_2$ (initial) (230 °C/2.16 kg), i.e. the melt flow rate before visbreaking, of the propylene random copolymer (P) is much lower, like in the range of 0.5 to 10.0 g/10 min. For example, the melt flow rate $MFR_2$ (initial) (230 °C/2.16 kg) of the propylene random copolymer (P) before visbreaking is in the range of 0.8 to 8.0 g/10 min, like in the range of 1.0 to 6.0 g/10 min.

In one embodiment of the present invention, the propylene random copolymer (P) has been visbroken with a visbreaking ratio [final $MFR_2$ (230 °C/2.16 kg) / initial $MFR_2$ (230 °C/2.16 kg)] of at least 5.0, wherein "final $MFR_2$ (230 °C/2.16 kg)" is the MFR2 (230 °C/2.16 kg) of the propylene random copolymer (P) after visbreaking and "initial $MFR_2$ (230 °C/2.16 kg)" is the $MFR_2$ (230 °C/2.16 kg) of the propylene random copolymer (P) before visbreaking. Preferably, the propylene random copolymer (P) has been visbroken with a visbreaking ratio [final $MFR_2$ (230 °C/2.16 kg) / initial $MFR_2$

(230 °C/2.16 kg)] of 5.0 to 100, wherein "final $MFR_2$ (230 °C/2.16 kg)" is the $MFR_2$ (230 °C/2.16 kg) of the propylene homopolymer after visbreaking and "initial $MFR_2$ (230 °C/2.16 kg)" is the $MFR_2$ (230 °C/2.16 kg) of the propylene homopolymer before visbreaking. More preferably, the propylene random copolymer (P) has been visbroken with a visbreaking ratio [final $MFR_2$ (230 °C/2.16 kg) / initial $MFR_2$ (230 °C/2.16 kg)] of 10 to 80, still more preferably 20 to 70, wherein "final $MFR_2$ (230 °C/2.16 kg)" is the $MFR_2$ (230 °C/2.16 kg) of the propylene random copolymer (P) after visbreaking and "initial $MFR_2$ (230 °C/2.16 kg)" is the $MFR_2$ (230 °C/2.16 kg) of the propylene random copolymer (P) before visbreaking.

The melting temperature Tm determined according to differential scanning calorimetry (DSC) of the propylene random copolymer (P) is in the range of 125 to 150 °C, preferably in the range of 128 to 145 °C, more preferably in the range of 130 to 142 °C, still more preferably in the range of 132 to 140 °C.

The propylene random copolymer (P) is further characterized by the amount of xylene cold solubles (XCS). It is preferred that the propylene random copolymer (P) has a xylene soluble content (XCS) determined according to ISO 16152 (25 °C) in the range of 3.0 to 15.0 wt.-%, more preferably in the range of 3.5 to 12.0 wt.-%, still more preferably in the range of 4.0 to 10.0 wt.-%, like in the range of 5.0 to 9.0 wt.-%. According to another preferred embodiment, the propylene random copolymer (P) has a xylene soluble content (XCS) determined according to ISO 16152 (25 °C) in the range of 0.1 to 15.0 wt.-%, more preferably in the range of 0.1 to 12.0 wt.-%, still more preferably in the range of 0.1 to 10.0 wt.-%, like in the range of 0.1 to 9.0 wt.-%.

The low amount of xylene cold solubles (XCS) additionally indicates that the propylene random copolymer (P) preferably does not contain elastomeric (co)polymers forming inclusions as a second phase for improving mechanical properties. A polymer containing elastomeric (co)polymers as insertions of a second phase would by contrast be called heterophasic and is preferably not part of the present invention. The presence of second phases or the so called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

Accordingly, it is preferred that the propylene random copolymer (P) according to this invention has no glass transition temperature below -30 °C, preferably below -25 °C, more preferably below -20 °C.

According to another preferred embodiment of the present invention, the comonomer of the propylene random copolymer is 1-butene. Therefore, it is especially preferred that the propylene random copolymer (P) comprises units derivable from propylene and 1-butene only. In other words, it is preferred that only propylene and 1-butene have been polymerized.

In another preferred embodiment, the propylene random copolymer (P) has a 1-butene content, in the range of 1.0 to 6.0 mol-%, more preferably in the range of 1.5 to 5.2 mol-%, still more preferably in the range of 2.0 to 5.2 mol-%, like in the range of 3.5 to 5.0 mol-%. In another preferred embodiment, the comonomer of the propylene random copolymer is 1-butene and the propylene random copolymer (P) has a 1-butene content, in the range of 1.0 to 6.0 mol-%, more preferably in the range of 1.5 to 5.2 mol-%, still more preferably in the range of 2.0 to 5.2 mol-%, like in the range of 3.5 to 5.0 mol-%.

According to another preferred embodiment of the present invention, the comonomer of the propylene random copolymer is 1-butene, and the propylene random copolymer (P) comprises

i) a first propylene random copolymer (P1) having a comonomer content in the range of 2.0 to 6.0 mol-%, preferably in the range of 2.5 to 5.5 mol-%, more preferably in the range of 3.0 to 5.0 mol-% (e.g. 4.0 to 4.5 mol-%), and
ii) a second propylene random copolymer (P2) having a comonomer content in the range of 4.0 to 10.0 mol-%, preferably in the range of 5.0 to 9.0 mol-%, more preferably in the range of 5.5 to 8.0 mol-% (e.g. 6.0 to 7.0 mol-%).

According to another preferred embodiment of the present invention, the comonomer of the propylene random copolymer is 1-butene, and the propylene random copolymer (P) has a xylene soluble content (XCS) determined according to ISO 16152 (25 °C) in the range of 0.1 to 5.0 wt.-%, preferably in the range of 0.2 to 3.0 wt.-%, more preferably in the range of 0.3 to 2.0 wt.%, based on the overall weight of the propylene random copolymer (P).

According to another preferred embodiment of the present invention, the comonomer of the propylene random copolymer is 1-butene, and the propylene random copolymer (P) has a melt flow rate $MFR_2$ (230 °C, 2.16 kg) determined according to ISO 1133 in the range of 45.0 to 150.0 g/10 min, preferably in the range of 50.0 to 130.0 g/10 min, more preferably in the range of 55.0 to 110.0 g/10 min, still more preferably in the range of 60.0 to 100.0 g/10 min. The propylene random copolymer (P) is in particular obtainable, preferably obtained, by a process as defined in detail below.

The process for the preparation of the propylene random copolymer (P) is preferably a sequential polymerization process comprising at least two reactors connected in series, wherein said process comprises the steps of

(A) polymerizing in a first reactor (R-1) being a slurry reactor (SR), preferably a loop reactor (LR), propylene and a comonomer selected from ethylene and C4 to C12 $\alpha$-olefins, preferably 1-hexene or 1-butene, obtaining a first

propylene random copolymer (P1) as defined in the instant invention,
(B) transferring said first propylene random copolymer (P1) and unreacted comonomers of the first reactor (R-1) in a second reactor (R-2) being a gas phase reactor (GPR-1),
(C) feeding to said second reactor (R-2) propylene and a comonomer selected from ethylene and C4 to C12 $\alpha$-olefins, preferably 1-hexene or 1-butene,
(D) polymerizing in said second reactor (R-2) and in the presence of said first propylene random copolymer (P1) propylene and a comonomer selected from ethylene and C4 to C12 $\alpha$-olefins, preferably 1-hexene or 1-butene, obtaining a second propylene random copolymer (P2) as defined in the instant invention, said first propylene random copolymer (P1) and said second propylene random copolymer (P2) form the propylene random copolymer (P) as defined in the instant invention, wherein further

in the first reactor (R-1) and second reactor (R-2) the polymerization takes place in the presence of a solid catalyst system (SCS) comprising

(i) a transition metal compound of formula (I)

$$R_n(Cp)_2MX_2 \qquad (I)$$

wherein

"M" is zirconium (Zr) or hafnium (Hf),
each "X" is independently a monovalent anionic $\sigma$-ligand,
each "Cp " is a cyclopentadienyl-type organic ligand independently selected from the group consisting of unsubstituted or substituted and/or fused cyclopentadienyl, substituted or unsubstituted indenyl or substituted or unsubstituted fluorenyl, said organic ligands coordinate to the transition metal (M),
"R" is a bivalent bridging group linking said organic ligands (Cp),
"n" is 1 or 2, preferably 1, and

(ii) optionally a cocatalyst (Co) comprising an element (E) of group 13 of the periodic table (IUPAC), preferably a cocatalyst (Co) comprising a compound of Al and/or B.

Concerning the definition of the propylene random copolymer (P), first random propylene copolymer (P1) and second random propylene copolymer (P2), reference is made to the definitions given above.
The solid catalyst system (SCS) is defined in more detail below.
Due to the use of the solid catalyst system (SCS) in a sequential polymerization process the manufacture of the above defined propylene random copolymer (P) is possible. In particular due to the preparation of a propylene copolymer, i.e. the first random propylene copolymer (P1), in the first reactor (R-1) and the conveyance of said propylene copolymer and especially the conveyance of unreacted comonomers into the second reactor (R-2) it is possible to produce a copolymer (P) with high comonomer content in a sequential polymerization process. Normally the preparation of a propylene copolymer with high comonomer content in a sequential polymerization process leads to fouling or in severe cases to the blocking of the transfer lines as normally unreacted comonomers condensate at the transfer lines. However with the new method the conversion of the comonomers is increased and therewith a better incorporation into the polymer chain leading to higher comonomer content and reduced stickiness problems is achieved.
The term "sequential polymerization process" indicates that the propylene random copolymer (P) is produced in at least two reactors connected in series. More precisely the term "sequential polymerization process" indicates in the present application that the polymer of the first reactor (R-1) is directly conveyed with unreacted comonomers to the second reactor (R-2). Accordingly the decisive aspect of the present process is the preparation of the propylene random copolymer (P) in two different reactors, wherein the reaction material of the first reactor (R-1) is directly conveyed to the second reactor (R-2). Thus the present process comprises at least a first reactor (R-1) and a second reactor (R-2). In one specific embodiment the instant process consists of two polymerization reactors (R-1) and (R-2). The term "polymerization reactor" shall indicate that the main polymerization takes place there. Thus in case the process consists of two polymerization reactors, this definition does not exclude the option that the overall process comprises for instance a pre-polymerization step in a pre-polymerization reactor. The term "consists of" is only a closing formulation in view of the main polymerization reactors.
The first reactor (R-1) is a slurry reactor (SR) and can be any continuous or simple stirred batch tank reactor or loop reactor operating in slurry. According to the present invention the slurry reactor (SR) is preferably a loop reactor (LR).
The second reactor (R-2) and any subsequent reactors are gas phase reactors (GPR). Such gas phase reactors (GPR) can be any mechanically mixed or fluid bed reactors. Preferably the gas phase reactor(s) (GPR) comprise a

mechanically agitated fluid bed reactor with gas velocities of at least 0.2 m/sec. Thus it is appreciated that the gas phase reactor (GPR) is a fluidized bed type reactor preferably with a mechanical stirrer.

The condition (temperature, pressure, reaction time, monomer feed) in each reactor is dependent on the desired product which is in the knowledge of a person skilled in the art. As already indicated above, the first reactor (R-1) is a slurry reactor (SR), like a loop reactor (LR), whereas the second reactor (R-2) is a gas phase reactor (GPR-1). The subsequent reactors - if present - are also gas phase reactors (GPR).

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379, and WO 98/58976.

Preferably, in the instant process for producing the propylene random copolymer (P) as defined above the conditions for the first reactor (R-1), i.e. the slurry reactor (SR), like a loop reactor (LR), of step (A) may be as follows:

- the temperature is within the range of 40 °C to 110 °C, preferably between 60 °C and 100 °C, more preferably in the range of 65 to 90 °C,
- the pressure is within the range of 20 bar to 80 bar, preferably between 40 bar and 70 bar,
- hydrogen can be added for controlling the molar mass in a manner known per se.

Subsequently, the reaction mixture from step (A) is transferred to the second reactor (R-2), i.e. gas phase reactor (GPR-1), i.e. to step (D), whereby the conditions in step (D) are preferably as follows:

- the temperature is within the range of 50 °C to 130 °C, preferably between 60 °C and 100 °C,
- the pressure is within the range of 5 bar to 50 bar, preferably between 15 bar to 40 bar,
- hydrogen can be added for controlling the molar mass in a manner known per se.

The residence time can vary in both reactor zones.

In one embodiment of the process for producing the propylene random copolymer (P) the residence time in the slurry reactor (SR), e.g. loop (LR) is in the range 0.2 to 4.0 hours, e.g. 0.3 to 1.5 hours and the residence time in the gas phase reactor (GPR) will generally be 0.2 to 6.0 hours, like 0.5 to 4.0 hours.

If desired, the polymerization may be effected in a known manner under supercritical conditions in the first reactor (R-1), i.e. in the slurry reactor (SR), like in the loop reactor (LR).

The conditions in the other gas phase reactors (GPR), if present, are similar to the second reactor (R-2).

The present process may also encompass a pre-polymerization prior to the polymerization in the first reactor (R-1). The pre-polymerization can be conducted in the first reactor (R-1), however it is preferred that the pre-polymerization takes place in a separate reactor, a so called pre-polymerization reactor.

The propylene random copolymer (P) according to the present invention is prepared in the presence of a solid catalyst system (SCS) comprising a transition metal compound.

The transition metal compound has the formula (I)

$$R_n(Cp)_2MX_2 \qquad (I)$$

wherein

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand; the optional one or more substituent(s) being independently selected preferably from halogen, hydrocarbyl (e.g. C1-C20-alkyl, C2-C20-alkenyl, C2- C20-alkynyl, C3-C12-cycloalkyl, C6-C20-aryl or C7-C20-arylalkyl), C3-C12- cycloalkyl which contains 1, 2, 3 or 4 heteroatom(s) in the ring moiety, C6-C20- heteroaryl, C1-C20-haloalkyl, $-SiR"_3$, $-OSiR"_3$, -SR", $-PR"_2$, OR" or $-NR"_2$,

each R" is independently a hydrogen or hydrocarbyl, e.g. C1-C20-alkyl, C2- C20-alkenyl, C2-C20-alkynyl, C3 -C12-cycloalkyl or C6-C20-aryl; or e.g. in case of $-NR"_2$, the two substituents R" can form a ring, e.g. five- or six-membered ring, together with the nitrogen atom to which they are attached;

R is a bridge of 1-3 atoms, e.g. a bridge of 1-2 C-atoms and 0-2 heteroatoms, wherein the heteroatom(s) can be e.g. Si, Ge and/or O atom(s), wherein each of the bridge atoms may bear independently substituents, such as Cl-C20-alkyl, tri(C1-C20-alkyl)silyl, tri(C1-C20-alkyl)siloxy or C6-C20-aryl substituents); or a bridge of 1-3 , e.g. one or two, hetero atoms, such as silicon, germanium and/or oxygen atom(s), e.g. $-SiR^{10}_2$, wherein each $R^{10}$ is independently C1-C20-alkyl, C3-12 cycloalkyl, C6-C20-aryl or tri(C1-C20-alkyl)silyl- residue, such as trimethylsilyl;

M is a transition metal of Group 4, e.g. Zr or Hf, especially Zr;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", -PR"$_3$, -SiR"$_3$, -OSiR"$_3$, -NR"$_2$ or -$CH_2$-Y, wherein Y is C6-C20-aryl, C6-C20-heteroaryl, C1-C20-alkoxy, C6-C20-aryloxy, NR"$_2$,-SR", -PR"$_3$, -SiR"$_3$, or - OSiR"$_3$;

each of the above mentioned ring moieties alone or as a part of another moiety as the substituent for Cp, X, R" or R can further be substituted e.g. with C1-C20-alkyl which may contain Si and/or O atoms;

n is 1 or 2.

Suitably, in each X as -$CH_2$-Y, each Y is independently selected from C6-C20-aryl, NR"$_2$, -SiR"$_3$ or -OSiR"$_3$. Most preferably, X as -$CH_2$-Y is benzyl. Each X other than -$CH_2$-Y is independently halogen, C1-C20-alkyl, C1-C20-alkoxy, C6-C20-aryl, C7-C20-arylalkenyl or - NR"$_2$ as defined above, e.g. -N(C1-C20-alkyl)$_2$.

Preferably, each X is halogen, methyl, phenyl or -$CH_2$-Y, and each Y is independently as defined above.

Cp is preferably cyclopentadienyl, indenyl or fluorenyl, optionally substituted as defined above. Ideally Cp is cyclopentadienyl or indenyl.

In a suitable subgroup of the compounds of formula (I), each Cp independently bears 1, 2, 3 or 4 substituents as defined above, preferably 1, 2 or 3, such as 1 or 2 substituents, which are preferably selected from C1-C20-alkyl, C6- C20-aryl, C7-C20-arylalkyl (wherein the aryl ring alone or as a part of a further moiety may further be substituted as indicated above), -OSiR"$_3$, wherein R" is as indicated above, preferably C1-C20-alkyl.

R, is preferably a methylene, ethylene or a silyl bridge, whereby the silyl can be substituted as defined above, e.g. a (dimethyl)Si=, (methylphenyl)Si=, (methylccylcohexyl)silyl= or (trimethylsilylmethyl)Si=; n is 0 or 1. Preferably, R" is other than hydrogen.

A specific subgroup includes the well-known metallocenes of Zr and Hf with two eta5-ligands which are bridged with cyclopentadienyl ligands optionally- substituted with e.g. siloxy, or alkyl (e.g. C1-6-alkyl) as defined above, or with two bridged indenyl ligands optionally substituted in any of the ring moieties with e.g. siloxy or alkyl as defined above, e.g. at 2-, 3-, 4- and/or 7-positions. Preferred bridges are ethylene or -$SiMe_2$.

The preparation of the metallocenes can be carried out according or analogously to the methods known from the literature and is within skills of a person skilled in the field. Thus for the preparation see e.g. EP-A-129 368, examples of compounds wherein the metal atom bears a -NR"$_2$ ligand see i.a. in WO-A-985683 1 and WO-A-0034341. For the preparation see also e.g. in EP-A-260 130. WO-A- 9728170, WO-A-9846616, WO-A-9849208, WO-A-9912981, WO-A-9919335, WO-A-9856831, WO-A-00 34341, EP-A-423 101 and EP-A-537 130.

The complexes of the invention are preferably asymmetrical. That means simply that the two indenyl ligands forming the metallocene are different, that is, each indenyl ligand bears a set of substituents that are either chemically different, or located in different positions with respect to the other indenyl ligand. More precisely, they are chiral, racemic bridged bisindenyl metallocenes. Whilst the complexes of the invention may be in their syn configuration ideally, they are in their anti configuration. For the purpose of this invention, racemic-anti means that the two indenyl ligands are oriented in opposite directions with respect to the cyclopentadienyl-metal-cyclopentadienyl plane, while racemic-syn means that the two indenyl ligands are oriented in the same direction with respect to the cyclopentadienyl-metal-cyclopentadienyl plane.

Preferred complexes of the invention are of formula (II') or (II)

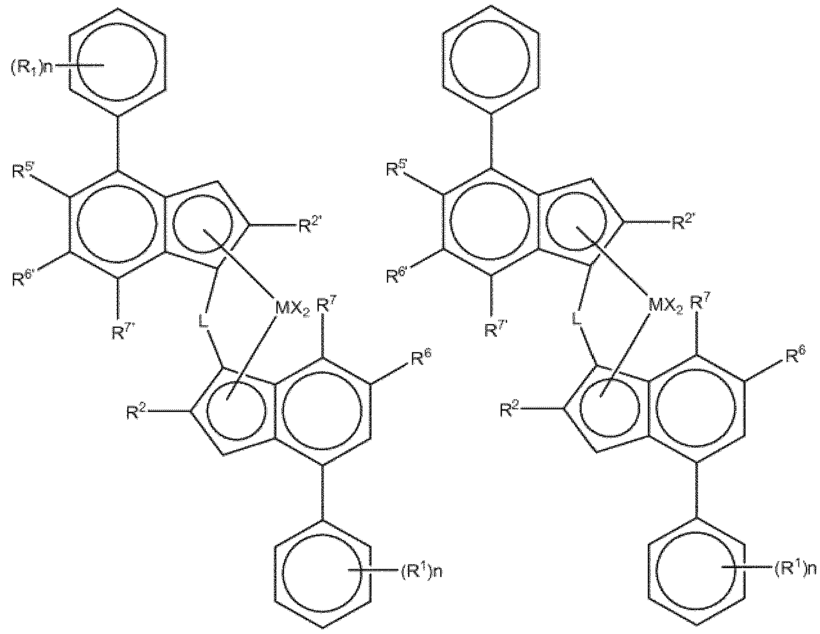

(II) (II')

wherein

M is Zr;

each X is a sigma ligand, preferably each X is independently a hydrogen atom, a halogen atom, a C1-C6 alkoxy group, C1-C6 alkyl, a phenyl or a benzyl group;

L is a divalent bridge selected from $-R'_2C-$, $-R'_2C-CR'_2$, $-R'_2Si-$, $-R'_2Si-SiR'_2-$, $-R'_2Ge-$, wherein each R' is independently a hydrogen atom, C1-C20 alkyl, C3-C10 cycloalkyl, tri(C1-C20-alkyl)silyl, C6-C20-aryl, C7-C20 arylalkyl

each $R^2$ or $R^{2'}$ is a C1-C10 alkyl group;

$R^{5'}$ is a C1-C10 alkyl group or a $Z'R^{3'}$ group;

$R^6$ is hydrogen or a C1-C10 alkyl group;

$R^{6'}$ is a C1-C10 alkyl group or a C6-C10 aryl group;

$R^7$ is hydrogen, a C1-C6 alkyl group or a $ZR^3$ group;

$R^{7'}$ is hydrogen or a C1-C10 alkyl group;

Z and Z' are independently O or S;

$R^{3'}$ is a C1-C10 alkyl group, or a C6-C10 aryl group optionally substituted by one or more halogen groups;

$R^3$ is a C1-C10 alkyl group;

each n is independently 0 to 4, e.g. 0, 1 or 2;

and each $R^1$ is independently a C1-C20 hydrocarbyl group, e.g. a C1-C10 alkyl group.

Particularly preferred compounds of the invention include:

*rac*-dimethylsilanediylbis[2-methyl-4-(4-*tert*-butylphenyl)-1,5,6,7-tetrahydro-s- indacen-I-yl] zirconium dichloride

*rac*-dimethylsilanediylbis(2-methyl-4-phenyl-5-methoxy-6-*tert*-butylinden-1-yl) zirconium dichloride
*rac*-anti-$Me_2$Si(2-Me-4-Ph-6-*t*Bu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-Ph-5-OMe-6-*t*Bu-Ind)$ZrCl_2$
*rac*-anti-$Me_2$Si(2-Me-4-(3,5-di-*t*BuPh)-6-*t*Bu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-Ph-5-$OC_6F_5$)-6-*i*Pr-Ind)$ZrCl_2$
*rac*-anti-Me(CyHex)Si(2-Me-4-Ph-6-*t*Bu-Ind)(2-Me-4-Ph-5-OMe-6-*t*Bu-Ind)$ZrCl_2$
*rac*-anti-$Me_2$Si(2-Me-4-(3,5-di-*t*BuPh)-7-Me-Ind)(2-Me-4-Ph-5-OMe-6-*t*Bu-Ind)ZrCb
*rac*-anti-$Me_2$Si(2-Me-4-(3,5-di-tBuPh)-7-OMe-Ind)(2-Me-4-Ph-5-OMe-6-*t*Bu- Ind)$ZrCl_2$
*rac*-anti-$Me_2$Si(2-Me-4-(p-*t*BuPh)-6-tBu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-(4-*t*BuPh)-5-OMe-6-tBu-Ind)$ZrCl_2$
*rac*-anti-$Me_2$Si(2-Me-4-(p-*t*BuPh)-Ind)(2-Me-4-(3,5-*t*Bu2Ph)-5-OMe-6-*t*Bu-Ind)$ZrCl_2$
*rac*-anti-$Me_2$Si(2-Me-4-(p-*t*BuPh)-Ind)(2-Me-4-Ph-5-OtBu-6-*t*Bu-Ind)$ZrCl_2$.

The most preferred metallocene complex (procatalyst) is rac-anti-dimethylsilandiyl(2-methyl-4-phenyl-5-methoxy-6-tert-butyl-indenyl)(2-methyl-4-(4-tert-butylphenyl)indenyl)zirconium dichloride.

Besides the metallocene complex (procatalyst), the metallocene catalyst comprises additionally a cocatalyst as defined in WO 2015/011135 A1. Accordingly the preferred cocatalyst is methylaluminoxane (MAO) and/or a borate, preferably trityl tetrakis(pentafluorophenyl)borate.

It is especially preferred that the metallocene catalyst is unsupported, i.e. no external carrier is used. Regarding the preparation of such a metallocene complex again reference is made to WO 2015/011135 A1.

**The fibers (F)**

Essential components of the present fiber reinforced composition (C) are the fibers (F).

Preferably the fibers (F) are selected from the group consisting of glass fibers, carbon fibers, polymeric fibers, metal fibers, mineral fibers, ceramic fibers and mixtures thereof. More preferably, the fibers (F) are glass fibers and/or carbon fibers.

It is especially preferred that the fibers (F) are glass fibers (GF). Preferably, the glass fibers (GF) are cut glass fibers, also known as short glass fibers (SGF) or chopped strands, and/or long glass fibers (LGF), preferably long glass fibers (LGF) obtained from glass rovings.

It is particularly preferred that the fibers (F) are short glass fibers (SGF)

The cut or short glass fibers (SGF) used in the fiber reinforced composition (C) preferably have an average length in the range of from 2.0 to 10.0 mm, more preferably in the range of 2.3 to 9.0 mm, still more preferably in the range of 2.5 to 8.0 mm, like in the range of 3.0 to 7.0 mm.

The cut or short glass fibers (SGF) used in the fiber reinforced composition (C) preferably have an average diameter of from 5 to 20 $\mu m$, more preferably from 6 to 18 $\mu m$, still more preferably 8 to 16 $\mu m$.

Preferably, the short glass fibers (SGF) have an aspect ratio of 125 to 650, preferably of 150 to 500, more preferably 200 to 450. The aspect ratio is the relation between average length and average diameter of the fibers.

**The adhesion promoter (AP)**

The fiber reinforced polypropylene composition (C) comprises an adhesion promoter (AP).

The adhesion promoter (AP) is specified as being a polar modified polypropylene (PM-PP) homo- or copolymer.

The polar modified polypropylene (PM-PP) homo- or copolymer comprises a low molecular weight compound having reactive polar groups. Modified polypropylene homopolymers and copolymers, like copolymers of propylene and ethylene or with other $\alpha$-olefins, e.g. C4 to C10 $\alpha$-olefins, are most preferred, as they are highly compatible with the propylene polymer (P) of the inventive fiber reinforced polypropylene composition (C).

In terms of structure, the polar modified polypropylene (PM-PP) homo- or copolymer are preferably selected from graft homo- or copolymers.

In this context, preference is given to polar modified polypropylene (PM-PP) homo- or copolymers containing groups derived from polar compounds, in particular selected from the group consisting of acid anhydrides, carboxylic acids, carboxylic acid derivatives, primary and secondary amines, hydroxyl compounds, oxazoline and epoxides, and also ionic compounds.

Specific examples of said polar compounds are unsaturated cyclic anhydrides and their aliphatic diesters, and the diacid derivatives. In particular, one can use maleic anhydride and compounds selected from C1 to C10 linear and branched dialkyl maleates, C1 to C10 linear and branched dialkyl fumarates, itaconic anhydride, C1 to C10 linear and branched itaconic acid dialkyl esters, acrylic acid, maleic acid, fumaric acid, itaconic acid and mixtures thereof.

Particular preference is given to use a polypropylene homo- or copolymer grafted with maleic anhydride or acrylic

acid as the polar modified polypropylene (PM-PP) homo- or copolymer, i.e. the adhesion promoter (AP).

The modified polymer, i.e. the adhesion promoter, can be produced in a simple manner by reactive extrusion of the polymer, for example with maleic anhydride or acrylic acid in the presence of free radical generators (like organic peroxides), as disclosed for instance in US 4,506,056, US 4,753,997 or EP 1 805 238.

Preferred amounts of groups derived from polar compounds in the polar modified polypropylene (PM-PP) homo- or copolymer, i.e. the adhesion promoter (AP), are from 0.5 to 5.0 wt.-%. For example, the amount may be in the range of 0.5 wt.-% to 4.5 wt.-%, preferably in the range of 0.5 wt.-% to 4.0 wt.-%, more preferably in the range of 0.5 wt.-% to 3.5 wt.-%.

Preferred values of the melt flow rate $MFR_2$ (230 °C) for the polar modified polypropylene (PM-PP) homo- or copolymer, i.e. for the adhesion promoter (AP), are from 20.0 to 400 g/10 min. It is particularly preferred that the polar modified polypropylene (PM-PP) homo- or copolymer has a melt flow rate $MFR_2$ (230 °C) in the range of 40.0 to 300 g/10 min, more preferably in the range of 50.0 to 250 g/10 min.

In one preferred embodiment of the present invention, the adhesion promoter (AP) is a maleic anhydride modified polypropylene homo-or copolymer and/or an acrylic acid modified polypropylene homo-or copolymer. Preferably, the adhesion promoter (AP) is a maleic anhydride modified polypropylene homopolymer and/or an acrylic acid modified polypropylene homopolymer and preferably a maleic anhydride modified polypropylene homopolymer. For example, suitable polar modified polypropylene (PM-PP) homo- or copolymers include, for example, a polypropylene homopolymer grafted with maleic anhydride (PP-g-MAH) and a polypropylene homopolymer grafted with acrylic acid (PP-g-AA).

According to another preferred embodiment of the present invention, the adhesion promoter (AP) is the propylene random copolymer (P) as described above grafted with maleic anhydride.

### The additives (AD)

In addition to the propylene random copolymer (P), the fibers (F) and the adhesion promoter (AP), the fiber reinforced composition (C) of the invention may include additives (AD). Typical additives are acid scavengers, antioxidants, colorants, light stabilisers, plasticizers, slip agents, anti-scratch agents, dispersing agents, processing aids, lubricants, pigments, and the like.

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

### The Polymeric Carrier Material

Preferably the fiber reinforced polypropylene composition (C) of the invention does not comprise (a) further polymer (s) different to the propylene random copolymer (P) and the adhesion promoter (AP), in an amount exceeding 5.0 wt.-%, preferably in an amount exceeding 3.0 wt.-%, more preferably in an amount exceeding 2.0 wt.-%, based on the weight of the fiber reinforced polypropylene composition (C). Any polymer being a carrier material for additives (AD) is not calculated to the amount of polymeric compounds as indicated in the present invention, but to the amount of the respective additive.

The polymeric carrier material of the additives (AD) is a carrier polymer to ensure a uniform distribution in the fiber reinforced polypropylene composition (C) of the invention. The polymeric carrier material is not limited to a particular polymer. The polymeric carrier material may be ethylene homopolymer, ethylene copolymer obtained from ethylene and $\alpha$-olefin comonomer such as C3 to C8 $\alpha$-olefin comonomer, propylene homopolymer and/or propylene copolymer obtained from propylene and $\alpha$-olefin comonomer such as ethylene and/or C4 to C8 $\alpha$-olefin comonomer. It is preferred that the polymeric carrier material does not contain monomeric units derivable from styrene or derivatives thereof.

### The article

The present invention also relates to an article, like an injection moulded article, comprising the fiber reinforced composition (C) as defined above. The present invention in particular relates to an article, like an injection moulded article, comprising at least 60 wt.-%, more preferably at least 80 wt.-%, still more preferably at least 90 wt.-%, like at least 95 wt.-% or at least 99 wt.-%, of the fiber reinforced polypropylene composition (C) as defined above. In an especially preferred embodiment the present invention relates to an article, like an injection moulded article, consisting of the fiber reinforced composition (C) as defined above.

Preferably, the article is an automotive article, like an injection moulded automotive article.

The present invention will now be described in further detail by the examples provided below.

## EXAMPLES

### A. Measuring methods

The following definitions of terms and determination methods apply for the above general description of the invention as well as to the below examples unless otherwise defined.

**Comonomer content of 1-hexene for a propylene 1-hexene copolymer (P)**

Quantitative $^{13}C\{^{1}H\}$ NMR spectra recorded in the molten-state using a Bruker Avance III 500 NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^{1}H\}$ NMR spectra were processed, integrated and relevant quantitative properties determined from the integrals. All chemical shifts are internally referenced to the methyl isotactic pentad *(mmmm)* at 21.85 ppm.

Characteristic signals corresponding to the incorporation of 1-hexene were observed and the comonomer content quantified in the following way.

The amount of 1-hexene incorporated in PHP isolated sequences was quantified using the integral of the αB4 sites at 44.2 ppm accounting for the number of reporting sites per comonomer:

$$H = I\alpha B4 / 2$$

The amount of 1-hexene incorporated in PHHP double consecutive sequences was quantified using the integral of the ααB4 site at 41.7 ppm accounting for the number of reporting sites per comonomer:

$$HH = 2 * I\alpha\alpha B4$$

When double consecutive incorporation was observed the amount of 1-hexene incorporated in PHP isolated sequences needed to be compensated due to the overlap of the signals αB4 and αB4B4 at 44.4 ppm:

$$H = (I\alpha B4 - 2 * I\alpha\alpha B4) / 2$$

The total 1-hexene content was calculated based on the sum of isolated and consecutively incorporated 1-hexene:

$$Htotal = H + HH$$

When no sites indicative of consecutive incorporation observed the total 1-hexeen comonomer content was calculated solely on this quantity:

$$Htotal = H$$

Characteristic signals indicative of regio 2,1-erythro defects were observed (Resconi, L., Cavallo, L., Fait, A., Piemontesi, F., Chem. Rev. 2000, 100, 1253).

The presence of 2,1-erythro regio defects was indicated by the presence of the Pαβ (21e8) and Pay (21e6) methyl sites at 17.7 and 17.2 ppm and confirmed by other characteristic signals.

The total amount of secondary (2,1-erythro) inserted propene was quantified based on the αα21e9 methylene site at 42.4 ppm:

$$P21 = I\alpha\alpha21e9$$

The total amount of primary (1,2) inserted propene was quantified based on the main $S\alpha\alpha$ methylene sites at 46.7 ppm and compensating for the relative amount of 2,1-erythro, $\alpha B4$ and $\alpha\alpha B4B4$ methylene unit of propene not accounted for (note H and HH count number of hexene monomers per sequence not the number of sequences):

$$P12 = I_S\alpha\alpha + 2{*}P21 + H + HH / 2$$

The total amount of propene was quantified as the sum of primary (1,2) and secondary (2,1-erythro) inserted propene:

$$Ptotal = P12 + P21 = I_S\alpha\alpha + 3{*}\ I\alpha\alpha21e9 + (I\alpha B4 - 2 * I\alpha\alpha B4) / 2 + I\alpha\alpha B4$$

This simplifies to:

$$Ptotal = I_S\alpha\alpha + 3{*}\ I\alpha\alpha21e9 + 0.5{*}I\alpha B4$$

The total mole fraction of 1-hexene in the polymer was then calculated as:

$$fH = Htotal / ( Htotal + Ptotal)$$

The full integral equation for the mole fraction of 1-hexene in the polymer was:

$$fH = (((I\alpha B4 - 2 * I\alpha\alpha B4) / 2) + (2 * I\alpha\alpha B4)) /((I_s\alpha\alpha + 3{*}\ I\alpha\alpha21e9 + 0.5{*}I\alpha B4) + ((I\alpha B4 - 2 * I\alpha\alpha B4) / 2) + (2 * I\alpha\alpha B4))$$

This simplifies to:

$$fH = (I\alpha\alpha B4/2 + I\alpha\alpha B4) / (I_S\alpha\alpha + 3{*}\ I\alpha\alpha21e9 + I\alpha B4 + I\alpha\alpha B4)$$

The total comonomer incorporation of 1-hexene in mole percent was calculated from the mole fraction in the usual manner:

$$H\ [mol\%] = 100 * fH$$

The total comonomer incorporation of 1-hexene in weight percent was calculated from the mole fraction in the standard manner:

$$H\ [wt\%] = 100 * ( fH * 84.16) / ( (fH * 84.16) + ((1 - fH) * 42.08) )$$

**Calculation** of comonomer content of the second propylene random copolymer (P2):

$$\frac{C(P) - w(P1)x\ C(P1)}{w(P2)} = C(P2)$$

wherein

w(P1) is the weight fraction of the first propylene random copolymer (P1),
w(P2) is the weight fraction of the second propylene random copolymer (P2),
C(P1) is the comonomer content [in mol-%] measured by $^{13}C$ NMR spectroscopy of the first propylene random copolymer (P1), i.e. of the product of the first reactor (R1),
C(P) is the comonomer content [in mol-%] measured by $^{13}C$ NMR spectroscopy of the product obtained in the second reactor (R2), i.e. the mixture of first propylene random copolymer (P1), and the second propylene random copolymer (P2) [of the propylene random copolymer (P)],
C(P2) is the calculated comonomer content [in mol-%] of the second propylene random copolymer (P2)

**Comonomer content of 1-butene for a propylene 1-butene copolymer** (P)

Quantitative $^{13}C\{^1H\}$ NMR spectra were recorded, processed and referenced as described above.
Characteristic signals corresponding to the incorporation of 1-butene were observed and the comonomer content quantified in the following way.
The amount 1-butene incorporated in PPBPP isolated sequences was quantified using the integral of the αB2 sites at 43.6 ppm accounting for the number of reporting sites per comonomer:

$$B = I\alpha / 2$$

The amount of 1-butene incorporated in PPBBPP double consecutively sequences was quantified using the integral of the ααB2B2 site at 40.5 ppm accounting for the number of reporting sites per comonomer:

$$BB = 2 * I\alpha\alpha$$

When double consecutive incorporation was observed the amount of 1-butene incorporated in PPBPP isolated sequences needed to be compensated due to the overlap of αB2 and αB2B2 signals at 43.9 ppm:

$$B = (I\alpha - 2 * I\alpha\alpha) / 2$$

The total 1-butene content was calculated based on the sum of isolated and consecutively incorporated 1-butene:

$$B_{total} = B + BB$$

The amount of propene was quantified based on the main Sαα methylene sites at 46.7 ppm and compensating for the relative amount of αB2 and ααB2B2 methylene unit of propene not accounted for (note B and BB count number of butane monomers per sequence not the number of sequences):

$$P_{total} = I_{S}\alpha\alpha + B + BB / 2$$

With characteristic signals corresponding to regio defects observed (Resconi, L., Cavallo, L., Fait, A., Piemontesi, F., Chem. Rev. 2000, 100, 1253), the compensation for misinserted propylene units was used for Ptotal.
In case of 2,1-erythro mis-insertions presence the signal from ninth carbon ($S_{21e9}$) of this microstructure element (Resconi, L., Cavallo, L., Fait, A., Piemontesi, F., Chem. Rev. 2000, 100, 1253) with chemical shift at 42.5 ppm was chosen for compensation. In this case:

$$P_{total} = I_{S}\alpha\alpha + B + BB / 2 + 3*I(S_{21e9})$$

The total mole fraction of 1-butene in the polymer was then calculated as:

$$fB = ( B_{total} / ( B_{total} + P_{total})$$

The total comonomer incorporation of 1-butene in mole percent was calculated from the mole fraction in the usual manner:

$$B [mol\%] = 100 * fB$$

The total comonomer incorporation of 1-butene in weight percent was calculated from the mole fraction in the standard manner:

$$B [wt\%] = 100 * ( fB * 56.11) / ( (fB * 56.11) + ((1 - fB) * 42.08) )$$

**Melt Flow Rate (MFR)**

The melt flow rates $MFR_2$ were measured with a load of 2.16 kg at 230 °C for propylene copolymers and with a

load of 2.16 kg at 190 °C for ethylene copolymers. The melt flow rate is that quantity of polymer in grams which the test apparatus standardised to ISO 1133 extrudes within 10 minutes at a temperature of 230 °C, respectively 190 °C under a load of 2.16 kg.

**The xylene cold solubles (XCS, wt.-%):** Content of xylene cold solubles (XCS) was determined at 25 °C according ISO 16152; first edition; 2005-07-01.

**Melting temperature $T_m$, crystallization temperature $T_c$,** was measured with Mettler TA820 differential scanning calorimetry (DSC) on 5-7 mg samples. DSC was run according to ISO 11357 / part 3 / method C2 in a heat / cool / heat cycle with a scan rate of 10 °C/min in the temperature range of -30 to +225°C. Crystallization temperature was determined from the cooling step, while melting temperature was determined from the second heating step. All mechanical measurements were conducted after 96 h conditioning time (at 23°C at 50 % relative humidity) of the test specimen.

**The glass transition temperature Tg** was determined by dynamic mechanical analysis according to ISO 6721-7. The measurements were done in torsion mode on compression moulded samples (40x10x1 $mm^3$) between -100 °C and +150 °C with a heating rate of 2 °C/min and a frequency of 1 Hz.

**Charpy unnotched impact strength** was determined according to ISO 179-1 / 1eU at 23 °C by using injection moulded test specimens (80 x 10 x 4 mm) prepared according to EN ISO 1873-2.

**Tensile properties** were determined on injection moulded dogbone specimens of 4 mm thickness prepared in accordance with EN ISO 1873-2. Tensile modulus was determined according to ISO 527-1A at a strain rate of 1 mm/min and 23°C, tensile strength and elongation (strain) at break were determined according to ISO 527-2 at a strain rate of 50 mm/min and 23°C.

### Heat DeflectionTemperature (HDT):

The HDT was determined on injection moulded test specimens of 80x10x4 $mm^3$ prepared according to ISO 1873-2. The test was performed on flatwise supported specimens according to ISO 75, condition A, with a nominal surface stress of 1.80 MPa.

**VOC/Fog emission** was measured according to VDA 278:2002 on injection moulded test specimen and on the granulated compounds. The volatile organic compounds were measured in toluene equivalents per gram. The fogging was measured in hexadecane equivalents per gram.

The measurements were carried out with a TDSA supplied by Gerstel using helium 5.0 as carrier gas and a column HP Ultra 2 of 50 m length and 0.32 mm diameter and 0.52 μm coating of 5 % Phenyl-Methyl-Siloxane.

The VOC-Analysis was done according to device setting 1 listed in the standard using following main parameters: flow mode splitless, final temperature 90 °C; final time 30 min, rate 60K/min. The cooling trap was purged with a flow-mode split 1:30 in a temperature range from -150 °C to + 280 °C with a heating rate of 12 K/sec and a final time of 5 min. The following GC settings were used for analysis: 2 min isothermal at 40 °C. heating at 3 K/min up to 92 °C, then at 5 K/min up to 160 °C, and then at 10 K/min up to 280 °C, 10 minutes isothermal; flow 1.3 ml/min.

The fog analysis was done according to device setting 1 listed in the standard using following main parameters: flow-mode splitless, rate 60 K/min; final temperature 120 °C; final time 60 min. The cooling trap was purged with a flow-mode split 1:30 in a temperature range from -150 °C to + 280 °C with a heating rate of 12 K/sec. The following GC-settings were used for analysis: isothermal at 50 °C for 2 min, heating at 25 K/min up to 160 °C, then at 10 K/min up to 280 °C, 30 minutes isothermal; flow 1.3 ml/min.

## 2. Examples

### Preparation of the catalyst

The metallocene (MC1) (rac-anti-dimethylsilandiyl(2-methyl-4-phenyl-5-methoxy-6-tert-butyl-indenyl)(2-methyl-4-(4-tert-butylphenyl)indenyl)zirconium dichloride) has been synthesized as described in WO 2013/007650.

The catalyst was prepared using metallocene MC1 and a catalyst system of MAO and trityl tetrakis(pentafluorophenyl)borate according to Catalyst 3 of WO 2015/11135 with the proviso that the surfactant is 2,3,3,3-tetrafluoro-2-(1,1,2,2,3,3,3-heptafluoropropoxy)-1-propanol. This catalyst was used for preparing the random propylene copolymers P-I and P-II.

### Preparation of the random propylene copolymer (P-I)

The random propylene copolymer **(P-I)** was prepared in a sequential process comprising a loop reactor and a gas phase reactor. The reaction conditions are summarized in Table 1.

**Table 1:** Preparation of the random propylene copolymer (P-I)

| | | P-I |
|---|---|---|
| **Prepolymerization** | | |
| Temperature | [°C] | 20 |
| Pressure | [kPa] | 5053 |
| Catalyst feed | [g/h] | 2.1 |
| TEAL/C3 | [g/t] | 0 |
| C3 feed | [kg/h] | 67.3 |
| H2 feed | [g/h] | 0.6 |
| Residence time | [h] | 0.4 |
| **Loop (R1)** | | |
| Temperature | [°C] | 70 |
| Pressure | [kPa] | 4949 |
| H2/C3 ratio | [mol/kmol] | 0.1 |
| C6/C3 ratio | [mol/kmol] | 8.0 |
| $MFR_2$ (loop) | [g/10min] | 2.5 |
| C6 (loop) | [mol-%] | 0.86 |
| Residence time | [h] | 0.7 |
| Split (loop) | [wt.-%] | 47 |
| **GPR (R2)** | | |
| Temperature | [°C] | 80 |
| Pressure | [kPa] | 2500 |
| H2/C3 ratio | [mol/kmol] | 0.9 |
| C6/C3 ratio | [mol/kmol] | 9.1 |
| C6 (GPR) calc. | [mol-%] | 3.8 |
| Residence time | [h] | 2.4 |
| Split (GPR) | [wt.-%] | 53 |
| C6 (total) | [mol-%] | 2.4 |
| XCS (total) | [wt.-%] | 8.8 |
| 1,2e regiodefects | [mol-%] | 0.8 |
| $MFR_2$ (copolymer) | [g/10min] | 1.5 |
| Tm | [°C] | 135 |
| Tg | [°C] | 2.0 |

The obtained copolymer was subsequently visbroken with a masterbatch of 5 wt.-% 2,5-dimethyl-2,5-di-(tert-butylperoxy)hexane with polypropylene (POX) in a co-rotating twin screw extruder at 210 to 230°C. The resulting modified propylene random copolymer (mP-I) has a melt flow rate $MFR_2$ (230 °C, 2.16 kg) of 79 g/10 min. This means that the visbreaking ratio is 52.7.

**Preparation of the random propylene copolymer (P-II)**

The random propylene copolymer **(P-II)** was prepared in a sequential process comprising a loop reactor and a gas phase reactor. The reaction conditions are summarized in Table 2.

**Table 2:** Preparation of the random propylene copolymer **(P-II)**

| | | **P-II** |
|---|---|---|
| **Prepolymerization** | | |
| Temperature | [°C] | 20 |
| Pressure | [kPa] | 4135 |
| Catalyst feed | [g/h] | 2.6 |
| TEAL/C3 | [g/t] | 0 |
| C3 feed | [kg/h] | 70.0 |
| H2 feed | [g/h] | 0.1 |
| Residence time | [h] | 0.4 |
| **Loop (R1)** | | |
| Temperature | [°C] | 68 |
| Pressure | [kPa] | 4897 |
| H2/C3 ratio | [mol/kmol] | 0.23 |
| C4/C3 ratio | [mol/kmol] | 48.0 |
| $MFR_2$ (loop) | [g/10min] | 70.6 |
| C4 (loop) | [mol-%] | 4.4 |
| Residence time | [h] | 0.5 |
| Split (loop) | [wt.-%] | 49 |
| **GPR (R2)** | | |
| Temperature | [°C] | 80 |
| Pressure | [kPa] | 2498 |
| H2/C3 ratio | [mol/kmol] | 2.3 |
| C4/C3 ratio | [mol/kmol] | 40.2 |
| C4 (GPR) calc. | [mol-%] | 6.6 |
| Residence time | [h] | 2.3 |
| Split (GPR) | [wt.-%] | 51 |
| C4 (total) | [mol-%] | 5.5 |
| XCS (total) | [wt.-%] | 0.4 |
| 1,2e regiodefects | [mol-%] | 0.9 |
| $MFR_2$ (copolymer) | [g/10min] | 94 |
| Tm | [°C] | 140 |
| Tg | [°C] | -2.0 |

The obtained copolymer was compounded without visbreaking, using a basic antioxidant combination for stabilization.

P-II is a C3C4 random copolymer having a melt flow rate $MFR_2$ (230 °C, 2.16 kg) of 94 g/10 min, a C4 comonomer content of 5.5 mol%, which does not contain nucleating agent. P-II has a melting temperature Tm determined according to differential scanning calorimetry (DSC) of 140°C and a crystallization temperature Tc according to differential scanning calorimetry (DSC) of 105°C.

**Preparation of the fiber reinforced composition (C)**

The fiber reinforced composition (C) was obtained by melt blending the modified propylene random copolymer

(mP-I) or the propylene random copolymer (P-II) with the glass fibers (GF), the adhesion promoter (AP) and the additives (AD) in a co-rotating twin screw extruder. The composition and properties of the inventive and comparative examples are summarized in Table 3.

**Table 3:** Composition and properties of the inventive and comparative examples

| | | CE1 | IE1 | IE2 | IE3 | CE2 |
|---|---|---|---|---|---|---|
| **mP-I** | [wt.-%] | 77.5 | 76.0 | 74.5 | | |
| **P-II** | | | | | 77.1 | |
| **hP** | [wt.-%] | | | | | 76.0 |
| **GF** | [wt.-%] | 20.0 | 20.0 | 20.0 | 20.0 | 20.0 |
| **AP1** | [wt.-%] | | 1.5 | | 1.5 | 1.5 |
| **AP2** | [wt.-%] | | | 3.0 | | |
| **AD1** | [wt.-%] | 2.5 | 2.5 | 2.5 | | 2.5 |
| **AD2** | | | | | 1.4 | |
| | | | | | | |
| **MFR** | [g/10min] | 18 | 18 | 19 | 29 | 18 |
| **Tensile modulus** | [MPa] | 3647 | 3748 | 3706 | 4519 | 5200 |
| **Tensile strength** | [MPa] | 55.8 | 63.1 | 62.3 | 86.0 | 94.9 |
| **Elongation at break** | [%] | 2.5 | 4.8 | 5.1 | 3.4 | 2.9 |
| **Charpy unnotched** | [kJ/m$^2$] | 20.3 | 52.7 | 57.3 | 51.4 | 47.3 |
| **HDT** | [°C] | 127 | 127 | 127 | 138 | 161 |
| **Tc** | [°C] | 99 | 99 | 99 | 110 | 123 |
| **Tm** | [°C] | 136 | 136 | 135 | 141 | 164 |
| **Hm** | J/g | 57 | 57 | 55 | 59 | 94 |
| **VOC** | μg/g | 1 | 11 | 1 | 2 | 25 |
| **Fog** | μg/g | 35 | 72 | 35 | 38 | 215 |

**hP** is the commercial propylene homopolymer HJ120UB of Borealis AG prepared with a Ziegler-Natta catalyst having a melt flow rate $MFR_2$ (230 °C) of 75 g/10 min, a density determined according to ISO 1183-187 of 905 kg/m$^3$ and a glass transition temperature Tg of +2 °C.

**GF** is the commercial product ECS 03 T-480H of Nippon Electric Glass Co., Ltd. having a filament diameter of 10.5 μm and a strand length of 3 mm.

**AP1** is the adhesion promoter SCONA TPPP 8112 GA by Scona being a polypropylene functionalized with maleic anhydride having a maleic anhydride content of 1.4 wt.-% and an MFR (190 °C, 2.16 kg) above 80 g/10 min, corresponding to an $MFR_2$ (230 °C, 2.16 kg) of about 50 g/10 min.

**AP2** is a MAH grafted copolymer of propylene and 1-hexene obtained by grafting the propylene random copolymer (P) as described above with 0.7 wt.-% maleic anhydride in the presence of 1000 ppm POX in a co-rotating twin screw extruder. AP2 has a melt flow rate $MFR_2$ (230 °C, 2.16 kg) of 72 g/10 min.

**AD1** is a masterbatch consisting of 8.0 wt.-% Tris (2,4-di-t-butylphenyl) phosphite (Kinox-68- G by HPL Additives), 8.0 wt.-% of pentaerythrityl-tetrakis(3-(3',5'-di-tert. butyl-4-hydroxyphenyl)-propionate (Irganox 1010FF by BASF), 20.0 wt.-% of carbon black (39.5 wt.-% masterbatch) by Borealis, and 64.0 wt.-% of the propylene homopolymer HC001A by Borealis having a density determined according to ISO 1183-187 of 905 kg/m$^3$ and a MFR (230 °C, 2.16 kg) of 3.2 g/10 min.

**AD2** is a masterbatch consisting of 14.3 wt.-% Tris (2,4-di-t-butylphenyl) phosphite (Kinox-68- G by HPL Additives), 14.3 wt.-% of pentaerythrityl-tetrakis(3-(3',5'-di-tert. butyl-4-hydroxyphenyl)-propionate (Irganox 1010FF by BASF), 35.7 wt.-% of carbon black (39.5 wt.-% masterbatch) by Borealis, and 35.7 wt.-% of the propylene homopolymer HC001A by Borealis having a density determined according to ISO 1183-187 of 905 kg/m$^3$ and a MFR (230 °C, 2.16 kg) of 3.2 g/10 min.

## Claims

1. Fiber reinforced composition (C) comprising

   a) 57.0 to 94.9 wt.-% of a propylene random copolymer (P) wherein the comonomer is selected from ethylene and/or at least one C4 to C12 α-olefin, said propylene random copolymer (P) having

      i) a melt flow rate $MFR_2$ (230 °C, 2.16 kg) determined according to ISO 1133 in the range of 45 to 150 g/10 min, and
      ii) a melting temperature Tm determined according to differential scanning calorimetry (DSC) in the range of 125 to 150 °C,
      iii) an amount of 1,2 erythro regio-defects of at least 0.4 mol-%,

   b) 5.0 to 40.0 wt.-% of fibers (F), and
   c) 0.1 to 5.0 wt.-% of an adhesion promoter (AP) being a polar modified polypropylene (PM-PP) homo- or copolymer,

   based on the overall weight of the fiber reinforced composition (C).

2. Fiber reinforced composition (C) according to claim 1, wherein the propylene random copolymer (P) has an amount of 1,2 erythro regio-defects in the range of 0.4 to 1.2 mol-%, and/or
   wherein the propylene random copolymer (P) has a comonomer content in the range of 1.0 to 6.0 mol-%.

3. Fiber reinforced composition (C) according to claim 1 or 2, wherein the propylene random copolymer (P) comprises

   i) a first propylene random copolymer (P1), and
   ii) a second propylene random copolymer (P2) having a higher comonomer content than the first propylene random copolymer (P1),

   wherein the weight ratio between the first propylene random copolymer (P1) and the second propylene random copolymer (P2) is in the range of 20/80 to 60/40 and the combined amount of the first propylene random copolymer (P1) and the second propylene random copolymer (P2) based on the propylene random copolymer (P) is at least 95.0 wt.-%.

4. Fiber reinforced composition (C) according to any one of the preceding claims, wherein the comonomer is at least one C4 to C12 α-olefin.

5. Fiber reinforced composition (C) according to any one of the preceding claims, wherein the comonomer is 1-hexene.

6. Fiber reinforced composition (C) according to any one of the preceding claims, wherein

   i) the first propylene random copolymer (P1) has a comonomer content in the range of 0.4 to 2.5 mol-%, and
   ii) the second propylene random copolymer (P2) has a comonomer content in the range of 2.8 to 7.0 mol-%.

7. Fiber reinforced composition (C) according to any one of the preceding claims, wherein the propylene random copolymer (P) has a xylene soluble content (XCS) determined according to ISO 16152 (25 °C) in the range of 3.0 to 15.0 wt.-%, based on the overall weight of the propylene random copolymer (P).

8. Fiber reinforced composition (C) according to any one of the preceding claims, wherein the propylene random copolymer (P) has been visbroken with a visbreaking ratio [final $MFR_2$ (230 °C/2.16 kg) / initial $MFR_2$ (230 °C/2.16 kg)] of at least 5.0, wherein "final $MFR_2$ (230 °C/2.16 kg)" is the $MFR_2$ (230 °C/2.16 kg) of the propylene random copolymer (P) after visbreaking and "initial $MFR_2$ (230 °C/2.16 kg)" is the $MFR_2$ (230 °C/2.16 kg) of the propylene random copolymer (P) before visbreaking, and optionally wherein the propylene random copolymer (P) has a melt flow rate $MFR_2$ (230 °C, 2.16 kg) determined according to ISO 1133 before visbreaking in the range of 0.5 to 10.0 g/10 min.

9. Fiber reinforced composition (C) according to claims 1 to 4, wherein the comonomer is 1-butene, and optionally wherein the propylene random copolymer (P) comprises

i) a first propylene random copolymer (P1) having a comonomer content in the range of 2.0 to 6.0 mol-%, and
ii) a second propylene random copolymer (P2) having a comonomer content in the range of 4.0 to 10.0 mol-%.

**10.** Fiber reinforced composition (C) according to claim 9, wherein the propylene random copolymer (P) has a xylene soluble content (XCS) determined according to ISO 16152 (25 °C) in the range of 0.1 to 5.0 wt.-%, based on the overall weight of the propylene random copolymer (P).

**11.** Fiber reinforced composition (C) according to any one of the preceding claims, wherein the fibers (F) are glass fibers (GF), preferably short glass fibers (SGF) having

i) an average length of 2.0 to 10.0 mm, and/or
ii) an average diameter of 5 to 20 $\mu$m.

**12.** Fiber reinforced composition (C) according to any one of the preceding claims, wherein the adhesion promoter (AP) is a polar modified polypropylene (PM-PP) being a propylene homo- or copolymer grafted with maleic anhydride having a melt flow rate $MFR_2$ (230 °C, 2.16 kg) determined according to ISO 1133 of 20.0 g/10 min to 400 g/10 min.

**13.** Fiber reinforced composition (C) according to any one of the preceding claims, having a melt flow rate $MFR_2$ (230 °C, 2.16 kg) determined according to ISO 1133 in the range of 8.0 to 60.0 g/10 min.

**14.** Fiber reinforced composition (C) according to any one of the preceding claims, wherein the propylene random copolymer (P) is obtained in the presence of a solid catalyst system (SCS) comprising a metallocene compound, and optionally wherein the metallocene compound has the formula (I)

$$R_n(Cp)_2MX_2 \qquad (I)$$

wherein

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand; the optional one or more substituent(s) being independently selected preferably from halogen, hydrocarbyl (e.g. C1-C20-alkyl, C2-C20-alkenyl, C2- C20-alkynyl, C3-C12-cycloalkyl, C6-C20-aryl or C7-C20-arylalkyl), C3-C12- cycloalkyl which contains 1, 2, 3 or 4 heteroatom(s) in the ring moiety, C6-C20- heteroaryl, C1-C20-haloalkyl, - $SiR''_3$, -$OSiR''_3$, -SR", -$PR''_2$, OR" or -$NR''_2$,
each R" is independently a hydrogen or hydrocarbyl, e.g. C1-C20-alkyl, C2- C20-alkenyl, C2-C20-alkynyl, C3 -C12-cycloalkyl or C6-C20-aryl; or e.g. in case of - $NR''_2$, the two substituents R" can form a ring, e.g. five- or six-membered ring, together with the nitrogen atom to which they are attached;
R is a bridge of 1-3 atoms, e.g. a bridge of 1-2 C-atoms and 0-2 heteroatoms, wherein the heteroatom(s) can be e.g. Si, Ge and/or O atom(s), wherein each of the bridge atoms may bear independently substituents, such as Cl-C20-alkyl, tri(C1-C20-alkyl)silyl, tri(C1-C20-alkyl)siloxy or C6-C20-aryl substituents); or a bridge of 1-3 , e.g. one or two, hetero atoms, such as silicon, germanium and/or oxygen atom(s), e.g. -$SiR^{10}_2$, wherein each $R^{10}$ is independently C1-C20-alkyl, C3-12 cycloalkyl, C6-C20-aryl or tri(C1-C20-alkyl)silyl- residue, such as trimethylsilyl;
M is a transition metal of Group 4, e.g. Zr or Hf, especially Zr;
each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", -$PR''_3$, -$SiR''_3$, -$OSiR''_3$, -$NR''_2$ or -$CH_2$-Y, wherein Y is C6-C20-aryl, C6-C20-heteroaryl, C1-C20-alkoxy, C6-C20-aryloxy, $NR''_2$,-SR", -$PR''_3$, -$SiR''_3$, or -$OSiR''_3$;
each of the above mentioned ring moieties alone or as a part of another moiety as the substituent for Cp, X, R" or R can further be substituted e.g. with C1-C20-alkyl which may contain Si and/or O atoms;
n is 1 or 2.

**15.** Article, comprising the fiber reinforced composition (C) according to any one of claims 1 to 14.

**Patentansprüche**

**1.** Faserverstärkte Zusammensetzung (C), umfassend

a) 57,0 bis 94,9 Gew.-% eines statistischen Propylencopolymers (P), wobei das Comonomer ausgewählt ist aus Ethylen und/oder mindestens einem C4- bis C12-α-Olefin, wobei das besagte statistische Propylencopolymer (P) aufweist

i) eine Schmelzflussrate $MFR_2$ (230 °C, 2,16 kg), bestimmt nach ISO 1133, im Bereich von 45 bis 150 g/10 min, und
ii) eine Schmelztemperatur Tm, bestimmt durch dynamische Differenzkalorimetrie (DSC), im Bereich von 125 bis 150 °C,
iii) einen Gehalt an 1,2-Erythro-Regio-Defekten von mindestens 0,4 Mol-%,

b) 5,0 bis 40,0 Gew.-% an Fasern (F), und
c) 0,1 bis 5,0 Gew.-% eines Haftvermittlers (AP), welcher ein polar modifiziertes Polypropylen (PM-PP) Homo- oder Copolymer ist,

bezogen auf das Gesamtgewicht der faserverstärkten Zusammensetzung (C).

**2.** Faserverstärkte Zusammensetzung (C) nach Anspruch 1, wobei das statistische Propylencopolymer (P) eine Menge an 1,2-Erythro-Regio-Defekten im Bereich von 0,4 bis 1,2 Mol-% aufweist, und/oder
wobei das statistische Propylencopolymer (P) einen Comonomergehalt im Bereich von 1,0 bis 6,0 Mol-% aufweist.

**3.** Faserverstärkte Zusammensetzung (C) nach Anspruch 1 oder 2, wobei das statistische Propylencopolymer (P) umfasst

i) ein erstes statistisches Propylencopolymer (P1), und
ii) ein zweites statistisches Propylencopolymer (P2) mit einem höheren Comonomergehalt als das erste statistische Propylencopolymer (P1),

wobei das Gewichtsverhältnis zwischen dem ersten statistischen Propylencopolymer (P1) und dem zweiten statistischen Propylencopolymer (P2) im Bereich von 20/80 bis 60/40 liegt und die kombinierte Menge des ersten statistischen Propylencopolymers (P1) und des zweiten statistischen Propylencopolymers (P2), bezogen auf das statistische Propylencopolymer (P), mindestens 95,0 Gew.-% beträgt.

**4.** Faserverstärkte Zusammensetzung (C) nach einem der vorhergehenden Ansprüche, wobei das Comonomer mindestens ein C4- bis C12-α-Olefin ist.

**5.** Faserverstärkte Zusammensetzung (C) nach einem der vorhergehenden Ansprüche, wobei das Comonomer 1-Hexen ist.

**6.** Faserverstärkte Zusammensetzung (C) nach einem der vorhergehenden Ansprüche, wobei

i) das erste statistische Propylencopolymer (P1) einen Comonomergehalt im Bereich von 0,4 bis 2,5 Mol-% aufweist, und
ii) das zweite statistische Propylencopolymer (P2) einen Comonomergehalt im Bereich von 2,8 bis 7,0 Mol-% aufweist.

**7.** Faserverstärkte Zusammensetzung (C) nach einem der vorhergehenden Ansprüche, wobei das statistische Propylencopolymer (P) einen nach ISO 16152 (25°C) bestimmten xylollöslichen Gehalt (XCS) im Bereich von 3,0 bis 15,0 Gew.-%, bezogen auf das Gesamtgewicht des statistischen Propylencopolymers (P), aufweist.

**8.** Faserverstärkte Zusammensetzung (C) nach einem der vorhergehenden Ansprüche, wobei das statistische Propylencopolymer (P) mit einem Visbreaking-Verhältnis [endgültiger $MFR_2$ (230 °C/2,16 kg) / anfänglicher $MFR_2$ (230 °C/2,16 kg)] von mindestens 5,0 visgebrochen wurde, wobei "endgültiger $MFR_2$ (230 °C/2,16 kg)" der $MFR_2$ (230 °C/2,16 kg) des statistischen Propylencopolymers (P) nach dem Visbreaking und "anfänglicher $MFR_2$ (230 °C/2,16 kg)" der $MFR_2$ (230 °C/2,16 kg) des statistischen Propylencopolymers (P) vor dem Visbreaking ist, und wobei das statistische Propylencopolymer (P) gegebenenfalls eine Schmelzflussrate $MFR_2$ (230 °C/2,16 kg), bestimmt gemäß ISO 1133, vor dem Visbreaking im Bereich von 0,5 bis 10,0 g/10 min aufweist.

**9.** Faserverstärkte Zusammensetzung (C) nach einem der Ansprüche 1 bis 4, wobei das Comonomer 1-Buten ist, und

wobei das statistische Propylencopolymer (P) gegebenenfalls umfasst

i) ein erstes statistisches Propylencopolymer (P1) mit einem Comonomergehalt im Bereich von 2,0 bis 6,0 Mol-%, und
ii) ein zweites statistisches Propylencopolymer (P2) mit einem Comonomergehalt im Bereich von 4,0 bis 10,0 Mol-%.

**10.** Die faserverstärkte Zusammensetzung (C) nach Anspruch 9, wobei das statistische Propylencopolymer (P) einen nach ISO 16152 (25 °C) bestimmten xylollöslichen Gehalt (XCS) im Bereich von 0,1 bis 5,0 Gew.-%, bezogen auf das Gesamtgewicht des statistischen Propylencopolymers (P), aufweist.

**11.** Faserverstärkte Zusammensetzung (C) nach einem der vorhergehenden Ansprüche, wobei die Fasern (F) Glasfasern (GF) sind, vorzugsweise Kurzglasfasern (SGF) mit

i) einer durchschnittliche Länge von 2,0 bis 10,0 mm und/oder
ii) einem durchschnittlichen Durchmesser von 5 bis 20 μm.

**12.** Faserverstärkte Zusammensetzung (C) nach einem der vorhergehenden Ansprüche, wobei der Haftvermittler (AP) ein polar modifiziertes Polypropylen (PM-PP) ist, das ein mit Maleinsäureanhydrid gepfropftes Propylenhomo- oder -copolymer mit einer Schmelzflussrate $MFR_2$ (230 °C/2,16 kg), bestimmt nach ISO 1133, im Bereich von 20,0 g/10 min bis 400 g/10 min, ist.

**13.** Faserverstärkte Zusammensetzung (C) nach einem der vorhergehenden Ansprüche, welche eine Schmelzflussrate $MFR_2$ (230 °C/2,16 kg), bestimmt nach ISO 1133, im Bereich von 8,0 bis 60,0 g/10 min, aufweist.

**14.** Faserverstärkte Zusammensetzung (C) nach einem der vorhergehenden Ansprüche, wobei das statistische Propylencopolymer (P) in Gegenwart eines festen Katalysatorsystems (SCS) erhalten wird, das eine Metallocen-Verbindung umfasst, und wobei die Metallocen-Verbindung gegebenenfalls die Formel (I) hat

$$R_n(Cp)_2MX_2 \qquad (I)$$

wobei

jedes Cp unabhängig ein unsubstituierter oder substituierter und/oder kondensierter Cyclopentadienyl-Ligand ist, z.B. substituierter oder unsubstituierter Cyclopentadienyl-, substituierter oder unsubstituierter Indenyl- oder substituierter oder unsubstituierter Fluorenyl-Ligand; wobei vorzugsweise der optionale Substituent oder die optionalen Substituenten unabhängig voneinander aus Halogen, Hydrocarbyl (z.B. C1-C20-Alkyl, C2-C20-Alkenyl, C2-C20-Alkinyl, C3-C12-Cycloalkyl, C6-C20-Aryl oder C7-C20-Arylalkyl), C3-C12-Cycloalkyl, welches 1, 2, 3 oder 4 Heteroatom(e) in der Ringeinheit enthält, C6-C20-Heteroaryl, C1-C20-Halogenalkyl, $-SiR''_3$, $-OSiR''_3$, -SR", $-PR''_2$, OR" oder $-NR''_2$ ausgewählt ist,
jedes R" unabhängig ein Wasserstoff oder ein Hydrocarbyl ist, z.B. C1-C20-Alkyl, C2-C20-Alkenyl, C2-C20-Alkinyl, C3-C12-Cycloalkyl oder C6-C20-Aryl; oder z.B. im Falle von - $NR''_2$ die beiden Substituenten R" zusammen mit dem Stickstoffatom, an das sie gebunden sind, einen Ring, z.B. einen fünf- oder sechsgliedrigen Ring, bilden können;
R eine Brücke aus 1-3 Atomen ist, z.B. eine Brücke aus 1-2 C-Atomen und 0-2 Heteroatomen, wobei das/die Heteroatom(e) z.B. Si-, Ge- und/oder O-Atom(e) sein kann, wobei jedes der Brückenatome unabhängig Substituenten tragen kann, wie CI-C20-Alkyl-, tri(C1-C20-alkyl)silyl-, tri(C1-C20-alkyl)siloxy- oder C6-C20-Arylsubstituenten); oder eine Brücke aus 1-3 , z.B. ein oder zwei Heteroatomen, wie Silicium-, Germanium- und/oder Sauerstoffatom(en), z.B. $-SiR^{10}{}_2$, wobei jedes $R^{10}$ unabhängig C1-C20-Alkyl, C3-12-Cycloalkyl, C6-C20-Aryl oder ein tri(C1-C20-alkyl)silyl-Rest, wie Trimethylsilyl, ist;
M ist ein Übergangsmetall der Gruppe 4, z.B. Zr oder Hf, insbesondere Zr;
jedes X ist unabhängig ein Sigma-Ligand, wie H, Halogen, C1-C20-Alkyl, C1-C20-Alkoxy, C2-C20-Alkenyl, C2-C20-Alkinyl, C3-C12-Cycloalkyl, C6-C20-Aryl, C6-C20-Aryloxy, C7-C20-Arylalkyl, C7-C20-Arylalkenyl, -SR", $-PR''_3$, $-SiR''_3$, $-OSiR''_3$, $-NR''_2$ oder $-CH_2$-Y, wobei Y C6-C20-Aryl, C6-C20-Heteroaryl, C1-C20-Alkoxy, C6-C20-Aryloxy, $NR''_2$, -SR", $-PR''_3$, $-SiR''_3$ oder $-OSiR''_3$ ist;
jede der oben erwähnten Ringeinheiten allein oder als Teil einer anderen Einheit als Substituent für Cp, X, R" oder R weiter substituiert sein kann, z.B. mit C1-C20-Alkyl, das Si- und/oder O-Atome enthalten kann;
n ist 1 oder 2.

**15.** Ein Gegenstand, umfassend die faserverstärkte Zusammensetzung (C) nach einem der Ansprüche 1 bis 14 .

## Revendications

**1.** Composition renforcée de fibres (C) comprenant

a) 57,0 à 94,9 % en poids d'un copolymère aléatoire de propylène (P), dans laquelle le comonomère est sélectionné parmi l'éthylène et/ou au moins une $\alpha$-oléfine en C4 à C12, ledit copolymère aléatoire de propylène (P) présentant

i) un indice de fluidité à chaud $MFR_2$ (230 °C, 2,16 kg) déterminé selon la norme ISO 1133 dans la plage de 45 à 150 g/10 min, et

b) une température de fusion Tm, déterminée par calorimétrie différentielle à balayage (DSC), dans la plage de 125 à 150 °C,

iii) une quantité de régiodéfauts 1,2 érythro d'au moins 0,4 % en mole,
b) 5,0 à 40,0 % en poids de fibres (F), et
c) 0,1 à 5,0 % en poids d'un promoteur d'adhérence (AP) étant un homo- ou copolymère de polypropylène modifié polaire (PM-PP),
sur la base du poids total de la composition renforcée de fibres (C).

**2.** Composition renforcée de fibres (C) selon la revendication 1, dans laquelle le copolymère aléatoire de propylène (P) présente une quantité de régiodéfauts 1,2 érythro dans la plage de 0,4 à 1,2 % en mole, et/ou
dans laquelle le copolymère aléatoire de propylène (P) présente une teneur en comonomère dans la plage de 1,0 à 6,0 % en mole.

**3.** Composition renforcée de fibres (C) selon la revendication 1 ou 2, dans laquelle le copolymère aléatoire de propylène (P) comprend

i) un premier copolymère aléatoire de propylène (P1), et
ii) un second copolymère aléatoire de propylène (P2) présentant une teneur en comonomère plus élevée que le premier copolymère aléatoire de propylène (P1),

dans laquelle le rapport pondéral entre le premier copolymère aléatoire de propylène (P1) et le second copolymère aléatoire de propylène (P2) se situe dans la plage de 20/80 à 60/40 et la quantité combinée du premier copolymère aléatoire de propylène (P1) et du second copolymère aléatoire de propylène (P2) sur la base du copolymère aléatoire de propylène (P) est d'au moins 95,0 % en poids.

**4.** Composition renforcée de fibres (C) selon l'une quelconque des revendications précédentes, dans laquelle le comonomère est au moins une $\alpha$-oléfine en C4 à C12.

**5.** Composition renforcée de fibres (C) selon l'une quelconque des revendications précédentes, dans laquelle le comonomère est le 1-hexène.

**6.** Composition renforcée de fibres (C) selon l'une quelconque des revendications précédentes, dans laquelle

i) le premier copolymère aléatoire de propylène (P1) présente une teneur en comonomère dans la plage de 0,4 à 2,5 % en mole, et
ii) le second copolymère aléatoire de propylène (P2) présente une teneur en comonomère dans la plage de 2,8 à 7,0 % en mole.

**7.** Composition renforcée de fibres (C) selon l'une quelconque des revendications précédentes, dans laquelle le copolymère aléatoire de propylène (P) présente une teneur soluble dans le xylène (XCS) déterminée selon la norme ISO 16152 (25 °C) dans la plage de 3,0 à 15,0 % en poids, sur la base du poids total du copolymère aléatoire de propylène (P).

**8.** Composition renforcée de fibres (C) selon l'une quelconque des revendications précédentes, dans laquelle le copolymère aléatoire de propylène (P) a subi une réduction de viscosité selon un rapport de viscoréduction [$MFR_2$ final (230 °C/2,16 kg)/$MFR_2$ initial (230 °C/2,16 kg)] d'au moins 5,0, dans laquelle « $MFR_2$ final (230 °C/2,16 kg) » est le $MFR_2$ (230 °C/2,16 kg) du copolymère aléatoire de propylène (P) après viscoréduction et « $MFR_2$ initial (230 °C/2,16 kg) » est le $MFR_2$ (230 °C/2,16 kg) du copolymère aléatoire de propylène (P) avant viscoréduction, et éventuellement dans laquelle le copolymère aléatoire de propylène (P) présente un indice de fluidité à chaud $MFR_2$ (230 °C, 2,16 kg) déterminé selon la norme ISO 1133 avant viscoréduction dans la plage de 0,5 à 10,0 g/10 min.

**9.** Composition renforcée de fibres (C) selon les revendications 1 à 4, dans laquelle le comonomère est le 1-butène, et éventuellement dans laquelle le copolymère aléatoire de propylène (P) comprend

i) un premier copolymère aléatoire de propylène (P1) présentant une teneur en comonomère dans la plage de 2,0 à 6,0 % en mole, et
ii) un second copolymère aléatoire de propylène (P2) présentant une teneur en comonomère dans la plage de 4,0 à 10,0 % en mole.

**10.** Composition renforcée de fibres (C) selon la revendication 9, dans laquelle le copolymère aléatoire de propylène (P) présente une teneur soluble dans le xylène (XCS) déterminée selon la norme ISO 16152 (25 °C) dans la plage de 0,1 à 5,0 % en poids, sur la base du poids total du copolymère aléatoire de propylène (P).

**11.** Composition renforcée de fibres (C) selon l'une quelconque des revendications précédentes, dans laquelle les fibres (F), sont des fibres de verre (GF), de préférence des fibres de verre courtes (SGF) présentent

i) une longueur moyenne de 2,0 à 10,0 mm, et/ou
ii) un diamètre moyen de 5 à 20 μm.

**12.** Composition renforcée de fibres (C) selon l'une quelconque des revendications précédentes, dans laquelle le promoteur d'adhérence (AP) est un polypropylène modifié polaire (PM-PP) qui est un homo- ou co-polymère de propylène greffé avec de l'anhydride maléique présentant un indice de fluidité à chaud $MFR_2$ (230 °C, 2,16 kg), déterminé selon la norme ISO 1133, de 20,0 g/10 min à 400 g/10 min.

**13.** Composition renforcée de fibres (C) selon l'une quelconque des revendications précédentes, présentant un indice de fusion à chaud $MFR_2$ (230 °C, 2,16 kg), déterminé selon la norme ISO 1133, dans la plage de 8,0 à 60,0 g/10 min.

**14.** Composition renforcée de fibres (C) selon l'une quelconque des revendications précédentes, dans laquelle le copolymère aléatoire de propylène (P) est obtenu en présence d'un système catalyseur solide (SCS) comprenant un composé métallocène, et éventuellement dans laquelle le composé métallocène présente la formule (I)

$$R_n(Cp)_2MX_2 \qquad (I)$$

dans laquelle

chaque Cp est indépendamment un ligand cyclopentadiényle non substitué ou substitué et/ou condensé, par ex., un ligand cyclopentadiényle substitué ou non substitué, indényle substitué ou non substitué, ou fluorényle substitué ou non substitué ; les un ou plusieurs substituants optionnels étant de préférence indépendamment sélectionnés parmi halogène, hydrocarbyle (par ex., alkyle en C1-C20, alcényle en C2-C20, alcynyle en C2-C20, cycloalkyle en C3-C12, aryle en C6-C20 ou arylalkyle en C7-C20), cycloalkyle en C3-C12 qui contient 1, 2, 3 ou 4 hétéroatome(s) dans le fragment cyclique, hétéroaryle en C6-C20, haloalkyle en C1-C20, $-SiR''_3$, $-OSiR''_3$, -SR", $-PR''_2$, OR" ou $-NR''_2$,
chaque R" est indépendamment hydrogène ou hydrocarbyle, par ex., alkyle en C1-C20, alcényle en C2-C20, alcynyle en C2-C20, cycloalkyle en C3-C12 ou aryle en C6-C20 ; ou par ex., dans le cas de $-NR''_2$, les deux substituants R" peuvent former un cycle à cinq ou six chaînons, conjointement avec l'atome d'azote auquel ils sont liés ;
R est un pont de 1-3 atomes, par ex., un pont de 1-2 atomes C et de 0-2 hétéroatomes, dans laquelle le ou les hétéroatomes peuvent être, par ex., un ou plusieurs atomes Si, Ge et/ou O, dans laquelle chacun des atomes de pont peut porter indépendamment des substituants, tels que des substituants alkyle en C1-C20, tri(alkyle en C1-C20)silyle, tri(alkyle en C1-C20)siloxy ou aryle en C6-C20) ; ou un pont de 1-3, par ex., un ou deux hétéro-atomes, tels qu'un ou plusieurs atomes de silicium, de germanium et/ou d'oxygène, par ex., $-SiR^{10}_2$, dans laquelle chaque

$R^{10}$ est indépendamment un résidu alkyle en C1-C20, cycloalkyle en C3-12, aryle en C6-C20 ou tri(alkyle en C1-C20)sililyle, tels que le triméthylsilyle ;
M est un métal de transition du groupe 4, par ex., Zr ou Hf, en particulier Zr ;
chaque X est indépendamment un ligand sigma, tel que H, halogène, alkyle en C1-C20, alcoxy en C1-C20, alcényle en C2-C20, alcynyle en C2-C20, cycloalkyle en C3-C12, aryle en C6-C20, aryloxy en C6-C20, arylalkyle en C7-C20, arylalcényle en C7-C20, -SR", $-PR"_3$, $-SiR"_3$, $-OSiR"_3$, $-NR"_2$ ou $-CH_2$-Y, dans laquelle Y est aryle en C6-C20, hétéroaryle en C6-C20, alcoxy en C1-C20, aryloxy en C6-C20, $NR"_2$, -SR", $-PR"_3$, $-SiR"_3$, ou $-OSiR"_3$ ;
chacun des fragments cycliques susmentionnés, seul ou en tant que partie d'un autre fragment comme substituant pour Cp, X, R" ou R, peut en outre être substitué par alkyle en C1-C20 qui peut contenir des atomes de Si et/ou de O ; et
n est 1 ou 2.

**15.** Article comprenant la composition renforcée de fibres (C) selon l'une quelconque des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014033017 A1
- EP 3095819 A1
- EP 0887379 A
- WO 9212182 A
- WO 9858976 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 2015011135 A1
- US 4506056 A
- US 4753997 A
- EP 1805238 A
- WO 2013007650 A
- WO 201511135 A


### Non-patent literature cited in the description


- *Pure Appl. Chem.*, 1996, vol. 68 (8), 1591-1595
- **HANS ZWEIFEL**. Plastic Additives Handbook. 2009, 1141-1190
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45 (S1), S198
- **RESCONI, L.** ; **CAVALLO, L.** ; **FAIT, A.** ; **PIEMONTESI, F.** *Chem. Rev.*, 2000, vol. 100, 1253